(19) Europäisches Patentamt / European Patent Office / Office européen des brevets

(11) **EP 4 450 865 B1**

(12) **EUROPEAN PATENT SPECIFICATION**

(45) Date of publication and mention
of the grant of the patent:
**21.01.2026 Bulletin 2026/04**

(21) Application number: **22907030.5**

(22) Date of filing: **26.10.2022**

(51) International Patent Classification (IPC):
**F21S 2/00** *(2016.01)*  **B41J 2/01** *(2006.01)*
**G06T 1/00** *(2006.01)*  **H04N 1/04** *(2006.01)*
**H04N 1/12** *(2006.01)*  **F21Y 115/10** *(2016.01)*

(52) Cooperative Patent Classification (CPC):
**G02B 6/0055; F21S 2/00; G02B 6/0088;
G02B 6/0091; G06K 15/1247; G06T 1/00;
H04N 1/04; H04N 1/12;** B41J 2/16579;
B41J 2/2142; F21Y 2115/10

(86) International application number:
**PCT/JP2022/039842**

(87) International publication number:
**WO 2023/112496 (22.06.2023 Gazette 2023/25)**

(54) **ILLUMINATING DEVICE, METHOD FOR DETERMINING DISPOSITION OF LIGHT-GUIDING PLATE, AND PRINTING SYSTEM**

BELEUCHTUNGSVORRICHTUNG, VERFAHREN ZUR BESTIMMUNG DER ANORDNUNG EINER LICHTLEITENDEN PLATTE UND DRUCKSYSTEM

DISPOSITIF D'ÉCLAIRAGE, PROCÉDÉ DE DÉTERMINATION DE DISPOSITION DE PLAQUE DE GUIDAGE DE LUMIÈRE ET SYSTÈME D'IMPRESSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **14.12.2021 JP 2021202720**

(43) Date of publication of application:
**23.10.2024 Bulletin 2024/43**

(73) Proprietor: **FUJIFILM Corporation
Tokyo 106-8620 (JP)**

(72) Inventor: **NAGASHIMA, Kanji
Ashigarakami-gun, Kanagawa 258-8577 (JP)**

(74) Representative: **Klunker IP
Patentanwälte PartG mbB
Destouchesstraße 68
80796 München (DE)**

(56) References cited:
**JP-A- 2006 017 951      JP-A- 2006 017 951
JP-A- 2006 067 551      JP-A- 2012 147 143
US-A1- 2019 101 690**

**Description**

1. Field of the Invention

The present invention relates to an illumination device, a light guide plate disposition determination method, and a printing system.

2. Description of the Related Art

In an ink jet printing system, in order to confirm a quality of a printed matter and to maintain the quality of the printed matter in good condition, a print image, a specific chart, and the like are read, and image processing technique is used to detect ink jetting deflection, a printing defect, and the like, and to correct density unevenness.

In digital printing of the ink jet printing system, characteristic printing defects such as density unevenness due to fine streak-like defects and differences in jetting characteristics for each nozzle can occur, unlike in analog printing such as offset printing. In the digital printing, the printing defect is detected with high accuracy, and appropriate correction is performed.

In addition, in a case in which the printing can be performed in a relatively short time, a relatively large number of printing operations can be performed within a certain time, and relatively high profits can be obtained. There is also a demand for high-speed performance of an ink jet printing device, and an ink jet printing device that performs high-resolution printing and shortens a related-art printing time to about one-half to one-third has been developed.

JP2006-17951A describes an illumination device applied to a reading device, such as a digital duplicator and an image scanner. The illumination device described in JP2006-17951A comprises an LED array in which a plurality of LEDs are disposed in an array, and uses a plate-shaped light guide plate to relatively increase a light utilization efficiency and realize uniform illumination.

JP2012-147143A discloses the preamble of independent claims 1 and 12, it describes an illumination unit consisting of an LED substrate on which a plurality of LEDs are disposed in an array, and a light guide member that guides light emitted from the LED to a light irradiation portion. JP2012-147143A describes that the disposition of two illumination units is defined in a case in which a ratio between a distance from the emission surface of the light guide member to the light irradiation portion and a length of the light guide member satisfies a defined condition for the two illumination units. It should be noted that LED is an abbreviation for light emitting diode.

**SUMMARY OF THE INVENTION**

In order to detect the printing defect such as the fine streak-like defect with high accuracy and to appropriately correct the printing defect for the printed matter that is transported at high speed, it is necessary to obtain a reading signal having a relatively high SN ratio by applying a required resolution in a case of reading the print image or the specific chart using the scanner or the like. It should be noted that S of the SN ratio is the initial of the English notation Signal, which represents a signal, and N of the SN ratio is the initial of the English notation Noise, which represents noise.

In a case in which an image sensor that reads the image is a line sensor in which a plurality of reading elements are arranged, in the reading device such as the scanner, a resolution in an arrangement direction of the reading elements is fixed. Meanwhile, the resolution of the reading device in a transport direction of the printed matter is determined from the transport speed of the printed matter and the reading period of the image sensor.

For example, in order to maintain the resolution in the transport direction of the printed matter in the same degree in a state in which the transport speed of the printed matter is doubled, it is necessary to halve the reading period of the image sensor. In a case in which the accumulation time of the reading element is substantially equal to the reading period, in order to maintain the SN ratio in the same degree in a case in which the reading period is halved, it is necessary to make a charge accumulation amount equal, and an amount of light received by the image sensor should be doubled. For example, in order to double the amount of light received by the image sensor, it is necessary to illuminate the printed matter with illumination light having a doubled illuminance.

In a case in which the same image sensor is used, the light-receiving sensitivity of the image sensor is the same, and as a method of increasing the amount of light reaching the image sensor with the intention of making the charge accumulation amount equal, a method of reflecting light that does not contribute to the reading by using a mirror, and guiding the reflected light to an irradiation position with the illumination light can be adopted. As the mirror, a light guide plate produced by using an acrylic resin having high transparency can be applied.

In a case in which the light guide plate is used, it is possible to efficiently increase an amount of illumination light by using totally reflected light of the light incident on the light guide plate, but an appropriate distance from the emission surface of the light guide plate to the irradiation position with the illumination light varies depending on a condition of the light guide plate, such as a condition of a size of the light guide plate or the total reflection of the light guide plate.

In the illumination device described in JP2006-17951A, a size of the light guide plate is defined, and further, an incidence angle of rays emitted from the light guide plate to a contact glass is defined as the disposition of the light guide plate, but a distance from an emission surface of the light guide plate to a light irradiation surface is not defined.

JP2012-147143A describes the disposition of the illumination unit that reduces a ripple of the illuminance under a condition of a range of a parameter that is not usually selected because a ripple degree of the illuminance is large, but does not describe an optimal disposition of the light guide plate.

The present invention has been made in view of such circumstances, and an object of the present invention is to provide an illumination device, a light guide plate disposition determination method, and a printing system in which appropriate disposition of a light guide plate is defined depending on a condition of the light guide plate.

The present disclosure relates to an illumination device comprising: a light source that emits light for illuminating an illumination target area; and a light guide plate including a first surface on which the light emitted from the light source is incident, a reflecting surface that reflects the light incident from the first surface one or more times and has an orientation intersecting the first surface, and an emission surface that faces the first surface and has an orientation intersecting the reflecting surface, in which, in the light guide plate, a direction from the first surface toward the emission surface is defined as a length direction, and a direction of a relatively short side among two directions orthogonal to the length direction is defined as a thickness direction, and in a case in which a total length of the light guide plate in the thickness direction is denoted by W, a refractive index of a periphery of the light guide plate is denoted by $n_1$, a refractive index of the light guide plate is denoted by $n_2$, and a maximum incidence angle with respect to the first surface corresponding to the number of reflections equal to or less than a maximum number of reflections defined from a condition in which the light incident on the light guide plate is totally reflected is denoted by $\theta_{imax}$, the light guide plate is disposed at a position at which a distance from the emission surface to the illumination target area is equal to or shorter than $L_t$, which is calculated by $L_t = \{(1/2) \times (n_1/n_2) \times W\}/\tan\theta_{imax}$.

With the illumination device according to the present disclosure, in the light guide plate using total reflection, in a case in which the total length of the light guide plate in the thickness direction is denoted by W, the refractive index of the periphery of the light guide plate is denoted by $n_1$, the refractive index of the light guide plate is denoted by $n_2$, and the maximum incidence angle with respect to the first surface corresponding to the number of reflections is denoted by $\theta_{imax}$, the light guide plate is disposed at a position at which the distance from the emission surface to the illumination target area is equal to or shorter than Lt, which is calculated by $Lt = \{(1/2) \times (n_1/n_2) \times W\}/\tan\theta_{imax}$. As a result, appropriate disposition of the light guide plate is defined depending on the condition of the light guide plate.

In the illumination device according to another aspect, the light guide plate may be disposed at a position at which the distance from the emission surface to the illumination target area is equal to or longer than a maximum size of a member entering the illumination target area or is equal to or longer than a maximum size of a member disposed in the illumination target area.

According to such an aspect, it is possible to avoid the contact between the member entering the illumination target area or the member disposed in the illumination target area, and the light guide plate.

In the illumination device according to another aspect, in a case in which a total length of the light guide plate in the length direction is denoted by B, the distance from the emission surface of the light source to the illumination target area is denoted by L, and the number of reflections is denoted by C, the maximum incidence angle $\theta_{imax}$ may be represented by $\theta_{imax} = \arctan[\{B + (L - B) \times (n_2/n_1)\}/(C \times W)]$.

According to such an aspect, the maximum incidence angle $\theta_{imax}$ can be defined by using the total length B of the light guide plate in the length direction, the distance L from the emission surface of the light source to the illumination target area, the refractive index $n_1$ of the periphery of the light guide plate, and the refractive index $n_2$ of the light guide plate.

In an air atmosphere, a refractive index 1 of air can be applied to the refractive index $n_1$ of the periphery of the light guide plate.

A shortest distance from the emission surface of the light source to the illumination target area can be applied to the distance L from the emission surface of the light source to the illumination target area.

In the illumination device according to another aspect, in a case in which a critical angle of the reflecting surface is denoted by $\theta_t$, the maximum number of reflections may be represented by $C_m = INT[\{B + (L - B) \times (n_2/n_1)\}/(W \times \tan\theta_t)]$, and an integer that is equal to or greater than 1 and equal to or less than the maximum number of reflections $C_m$ may be defined for the number of reflections C.

According to such an aspect, the maximum number of reflections $C_m$ can be defined by using the total length B of the light guide plate in the length direction, the distance L from the emission surface of the light source to the illumination target area, the total length W of the light guide plate in the thickness direction, the refractive index $n_1$ of the periphery of the light guide plate, the refractive index $n_2$ of the light guide plate, and the critical angle $\theta_t$ of the reflecting surface, and the number of reflections C can be defined based on the maximum number of reflections $C_m$.

In the illumination device according to another aspect, in a case in which an incidence angle with respect to the first surface of the light guide plate is denoted by $\theta_i$, an incidence angle $\theta°$ on the reflecting surface may be represented by $\theta° = 90° - \arcsin\{(n_1/n_2) \times \sin\theta_i\}$.

According to such an aspect, the incidence angle $\theta$ on the reflecting surface can be defined by using the refractive index $n_1$ of the periphery of the light guide plate, the refractive index $n_2$ of the light guide plate, and the incidence angle $\theta_i$ on the first surface of the light guide plate.

In the illumination device according to another aspect, the critical angle $\theta_t$ of the reflecting surface may be defined as $\theta_t = \arcsin(n_1/n_2)$.

According to such an aspect, the critical angle $\theta_t$ of the reflecting surface can be defined by using the refractive index $n_1$ of the periphery of the light guide plate and the refractive index $n_2$ of the light guide plate.

In the illumination device according to another aspect, during fixation of the light guide plate, a non-reflection position different from a reflection position of the light on the reflecting surface may be supported.

According to such an aspect, it is possible to avoid the inhibition of the total reflection at the position at which the light guide plate is supported during fixation of the light guide plate.

In the illumination device according to another aspect, in a case in which the number of reflections is one, during fixation of the light guide plate, a position between the reflection position and the emission surface of the light guide plate may be supported.

According to such an aspect, a position between the reflection position and the emission surface of the light guide plate can be applied to the support position at which the inhibition of the total reflection can be avoided.

In the illumination device according to another aspect, in a case in which the number of reflections is two or more, during fixation of the light guide plate, the non-reflection position at which a distance between adjacent reflection positions is longest may be supported.

According to such an aspect, a position at which a distance between the reflection positions is relatively long can be applied to the support position of the light guide plate for avoiding the inhibition of the total reflection.

In the illumination device according to another aspect, in a case in which the number of reflections is two or more, during fixation of the light guide plate, in a case in which a distance between the reflection position closest to the emission surface of the light guide plate and the emission surface of the light guide plate is longer than a distance between adjacent reflection positions, the non-reflection position between the reflection position closest to the emission surface of the light guide plate and the emission surface of the light guide plate may be supported.

According to such an aspect, a position at which a distance between the reflection positions is relatively long can be applied to the support position of the light guide plate for avoiding the inhibition of the total reflection.

In the illumination device according to another aspect, in a case in which the number of reflections is two or more, during fixation of the light guide plate, a position having a low density of light may be supported.

According to such an aspect, the support position of the light guide plate for avoiding the inhibition of the total reflection can be defined depending on the density of light on the reflecting surface.

In the illumination device according to another aspect, the emission surface of the light guide plate may have diffusivity of the light emitted from the emission surface of the light guide plate.

According to such an aspect, the illumination target area can be irradiated with diffused light having a uniform light amount distribution.

In the illumination device according to another aspect the emission surface of the light guide plate may be a smooth surface, and a diffusion member that diffuses the light emitted from the emission surface of the light guide plate may be disposed between the emission surface of the light guide plate and the illumination target area.

According to such an aspect, the illumination target area can be irradiated with diffused light having a uniform light amount distribution.

The present disclosure relates to a light guide plate disposition determination method in an illumination device including a light source that emits light for illuminating an illumination target area, and a light guide plate including a first surface on which the light emitted from the light source is incident, a reflecting surface that reflects the light incident from the first surface one or more times and has an orientation intersecting the first surface, and an emission surface that faces the first surface and has an orientation intersecting the reflecting surface, in which, in the light guide plate, a direction from the first surface toward the emission surface is defined as a length direction, and a direction of a relatively short side among two directions orthogonal to the length direction is defined as a thickness direction, the light guide plate disposition determination method comprising: determining, in a case in which a total length of the light guide plate in the thickness direction is denoted by W, a refractive index of a periphery of the light guide plate is denoted by $n_1$, a refractive index of the light guide plate is denoted by $n_2$, and a maximum incidence angle with respect to the first surface corresponding to the number of reflections equal to or less than a maximum number of reflections defined from a condition in which the light incident on the light guide plate is totally reflected is denoted by $\theta_{imax}$, disposition of the light guide plate at a position at which a distance from the emission surface to the illumination target area is equal to or shorter than Lt, which is calculated by $L_t = \{(1/2) \times (n_1/n_2) \times W\}/\tan\theta_{imax}$.

With the light guide plate disposition determination method according to the present disclosure, it is possible to obtain the same effects as the effects of the illumination device according to the present disclosure. Configuration requirements of the illumination device according to another aspect can be applied to configuration requirements of the light guide plate disposition determination method according to another aspect.

The present disclosure relates to a printing system comprising: a printing device; and a reading device that reads a printed matter generated by using the printing device, in which the reading device includes a light source that emits light for illuminating an illumination target area of the printed matter, and a light guide plate including a first surface on which the light emitted from the light source is incident, a reflecting surface that reflects the light incident from the first surface one or more times and has an orientation intersecting the first surface, and an emission surface that faces the first surface and has an orientation intersecting the reflecting surface, in the light guide plate, a direction from the first surface toward the emission surface is defined as a length direction, and a direction of a relatively short side among two directions orthogonal to the length direction is defined as a thickness direction, and in a case in which a total length of the light guide plate in the thickness direction is denoted by W, a refractive index of a periphery of the light guide plate is denoted by $n_1$, a refractive index of the light guide plate is denoted by $n_2$, and a maximum incidence angle with respect to the first surface corresponding to the number of reflections equal to or less than a maximum number of reflections defined from a condition in which the light incident on the light guide plate is totally reflected is denoted by $\theta_{imax}$, the light guide plate is disposed at a position at which a distance from the emission surface to the illumination target area is equal to or shorter than Lt, which is calculated by Lt = $\{(1/2) \times (n_1/n_2) \times W\}/\tan\theta_{imax}$.

With the printing system according to the present disclosure, it is possible to obtain the same effects as the effects of the illumination device according to the present disclosure. Configuration requirements of the illumination device according to another aspect can be applied to configuration requirements of the printing system according to another aspect.

In the printing system according to the present disclosure, the printing device may comprise an ink jet head that jets an ink by applying an ink jet method.

The printing system according to another aspect may further comprise a reference member as a reference in a case of setting a reading condition of the reading device; a support member that supports the reference member; and a reference member moving device that moves the reference member between a reading position at which the reference member is read by using the reading device and that is included in the illumination target area, and a retreat position at which the reference member retreats from the reading position, in which the light guide plate is disposed at a position at which the distance from the emission surface to the illumination target area is equal to or longer than a maximum size of the support member.

According to such an aspect, it is possible to avoid the contact between the support member that supports the reference member and the light guide plate in a case in which the reference member used for the adjustment of the reading device is allowed to enter the illumination target area.

In the printing system according to another aspect, the reading device may include an image sensor that reads the printed matter, and an image-forming lens that forms an optical image of the printed matter on the image sensor, and the emission surface may have unevenness that diffuses the light emitted from the emission surface in an area corresponding to a numerical aperture of the image-forming lens.

According to such an aspect, the illumination target area can be irradiated with diffused light having a uniform light amount distribution.

According to the present invention, in the light guide plate using total reflection, in a case in which the total length of the light guide plate in the thickness direction is denoted by W, the refractive index of the periphery of the light guide plate is denoted by $n_1$, the refractive index of the light guide plate is denoted by $n_2$, and the maximum incidence angle with respect to the first surface corresponding to the number of reflections is denoted by $\theta_{imax}$, the light guide plate is disposed at a position at which the distance from the emission surface to the illumination target area is equal to or shorter than $L_t$, which is calculated by $L_t = \{(1/2) \times (n_1/n_2) \times W\}/\tan\theta_{imax}$. As a result, appropriate disposition of the light guide plate is defined depending on the condition of the light guide plate.

## BRIEF DESCRIPTION OF THE DRAWINGS

Fig. 1 is an overall configuration view showing a schematic configuration of a reading device provided with an illumination device according to an embodiment.

Fig. 2 is a view showing the reading device shown in Fig. 1 in a direction of an arrow A shown in Fig. 1.

Fig. 3 is a functional block diagram showing an electric configuration of the reading device shown in Fig. 1.

Fig. 4 is a schematic view showing a configuration example of the illumination device shown in Fig. 1.

Fig. 5 is a schematic view in a case in which a ray density shown in Fig. 4 is increased.

Fig. 6 is a schematic view of an example in which emitted light of a light guide plate is made incident on a diffusion plate.

Fig. 7 is a schematic view of rays in a case in which the number of reflections is one.

Fig. 8 is an explanatory view of an incidence angle with respect to a first surface of the light guide plate and an incidence angle with respect to a reflecting surface.

Fig. 9 is a schematic view of rays in a case in which the number of reflections is two or more.

Fig. 10 is a cross-sectional view of the light guide plate in a case in which a cross-sectional shape is hexagonal.

Fig. 11 is a perspective view showing a schematic configuration of a reference plate moving device.

Fig. 12 is a schematic view showing a standby state of a reference plate.

Fig. 13 is a schematic view showing a state in which the reference plate reaches a reading start position.

Fig. 14 is a schematic view showing a state in which the reference plate reaches a reading central position.

Fig. 15 is a schematic view showing a state in which the reference plate reaches a reading end position.

Fig. 16 is a perspective view of a reference plate bracket.

Fig. 17 is a side view of the reference plate bracket.

Fig. 18 is an overall configuration view showing a schematic configuration of a printing system according to the embodiment.

Fig. 19 is a functional block diagram showing an electric configuration of the printing system shown in Fig. 18.

Fig. 20 is a block diagram showing a hardware configuration example of a control device applied to the printing system shown in Fig. 18.

## DESCRIPTION OF THE PREFERRED EMBODIMENTS

Hereinafter, the detailed description of preferred embodiments of the present invention will be made with reference to the accompanying drawings. In the present specification, the same reference numeral will be given to the same configuration element and the duplicate description thereof will be omitted as appropriate.

[Schematic configuration of reading device provided with illumination device according to embodiment]

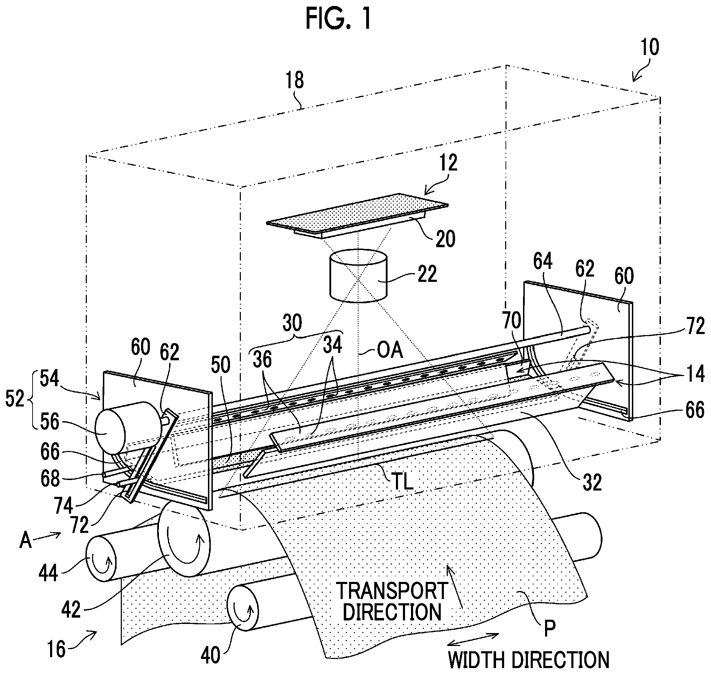

Fig. 1 is an overall configuration view showing a schematic configuration of a reading device provided with an illumination device according to an embodiment. The reading device 10 shown in Fig. 1 comprises an image reception device 12, an illumination device 14, and a transport device 16. The image reception device 12 and the illumination device 14 are accommodated in a housing 18 with an open bottom surface. Fig. 1 shows the housing 18 in a see-through manner.

The reading device 10 irradiates a printed matter P, which is a reading target, with illumination light by using the transport device 16, receives reflected light of the printed matter P by using the image reception device 12, generates read data of the printed matter P, and output the generated read data.

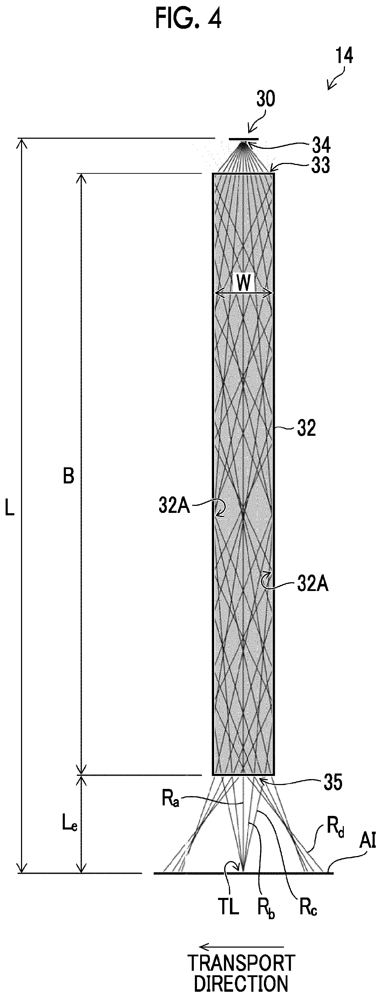

The image reception device 12 comprises an image sensor 20 and an image-forming lens 22. As the image sensor 20, a line sensor in which a plurality of light-receiving elements are arranged in a row in a width direction of the printed matter P orthogonal to a transport direction of the printed matter P may be applied, or an area sensor in which a plurality of light-receiving elements are arranged in a two-dimensional manner may be applied. An arrow line shown in Fig. 1 and described as the transport direction indicates the transport direction of the printed matter P, and an arrow line described as the width direction indicates the width direction of the printed matter P. The same applies to Figs. 4 to 10.

It should be noted that the term "orthogonal" is not limited to strict orthogonality, and may include the concept of substantial orthogonality that can be considered as orthogonality even in a case in which an actual angle between two directions is smaller than 90° or greater than 90°. Similarly, the term "parallel" is not limited to strict parallelism, and may include the concept of substantial parallelism that can be considered as parallelism even in a case in which two directions actually intersect each other.

Fig. 1 shows the image sensor 20 in which a plurality of light-receiving elements are arranged over a length shorter than the entire width of the printed matter P in the width direction. It should be noted that the plurality of light-receiving elements are not shown. In addition, a line segment to which reference numeral OA shown in Fig. 1 is added indicates a part of an optical axis of the image-forming lens 22.

The image-forming lens 22 forms an optical image of the printed matter P on the image sensor 20. A reduction optical system is applied to the image-forming lens 22. As a result, it is possible to read the entire width of the printed matter P in the width direction by using the image sensor 20 having a reading length shorter than the entire width of the printed matter P in the width direction.

The illumination device 14 comprises two LED light sources 30 and two light guide plates 32. One LED light source 30 and the other LED light source 30 are disposed at symmetrical positions with a reading line TL of the image reception device 12 interposed therebetween in the transport direction of the printed matter P. Similarly, one light guide plate 32 and the other light guide plate 32 are disposed at symmetrical positions with the reading line TL of the printed matter P interposed therebetween in the transport direction of the printed matter P.

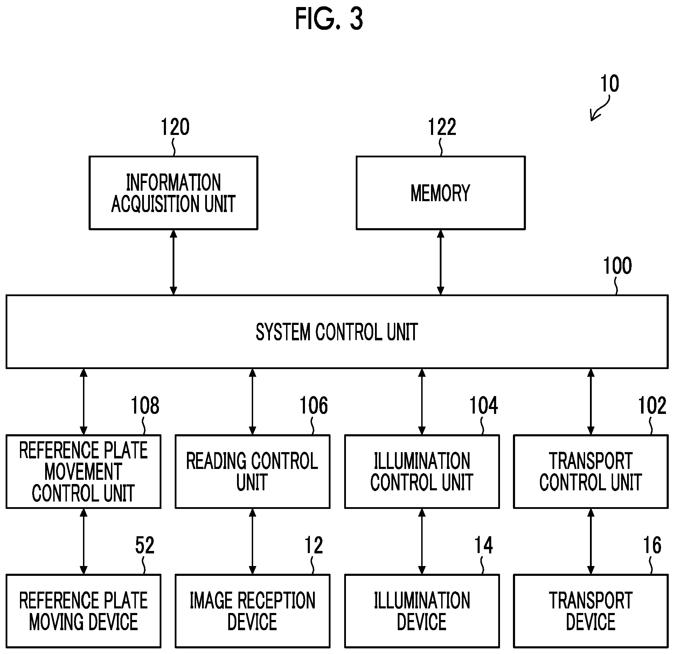

The reading line TL is a reading target position of the image sensor 20 provided in the image reception device 12. The reading line TL has a length equal to or longer than the total length of the printed matter P in the width direction of the printed matter P. The reading line TL is disposed at a position at which different positions of the printed matter P are read at each reading period of the image sensor 20 in response to the transport of the printed matter P of a length determined for each reading target in the transport direction of the printed matter P in response to an instruction of a reading control unit. It should be noted that the reading control unit is shown in Fig. 3 with reference numeral 106.

The two LED light sources 30 and the two light guide plates 32 each illuminate the printed matter P from an oblique direction with respect to a normal line of the printed matter P. The two LED light sources 30 and the two light guide plates 32 are each applied with a posture in which an optical axis is directed to the reading line TL.

The LED light source 30 has a structure in which a plurality of LED elements 34 are arranged along a width direction of the LED light source 30. The plurality of LED elements 34 are mounted on an LED substrate 36. The LED substrate 36 includes wiring lines electrically connected to the LED elements 34.

The plurality of LED elements 34 may be disposed in a row or in a two-dimensional manner. Examples of the two-dimensional disposition include a two-row zigzag disposition and a matrix disposition. Fig. 1 shows the LED light source 30 in which the plurality of LED elements 34 are arranged over a length longer than the total length of the printed matter P in the width direction. The same configuration can be applied to the one LED light source 30 and the other LED light source 30.

The light guide plate 32 shown in Fig. 1 has a rectangular shape, and a length direction, a width direction, and a thickness direction are defined. The length direction, the width direction, and the thickness direction are orthogonal to each other. In the light guide plate 32 shown in Fig. 1, the length direction is a direction from the LED light source 30 toward the reading line TL, and the width direction is a direction parallel to the width direction of the LED light source 30. In addition, the thickness direction is a direction orthogonal to the length direction of the light guide plate 32 and orthogonal to the width direction of the light guide plate 32. That is, among the two directions orthogonal to the length direction of the light guide plate 32, a direction of a relatively short side is defined as the thickness direction, and a direction of a relatively long side is defined as the width direction.

The total length of the light guide plate 32 in the width direction is equal to or longer than the total length of the LED light source 30 in the width direction, and the total length of the light guide plate 32 in the length direction is shorter than the distance from the emission surface of the LED light source 30 to the reading line TL.

The light guide plate 32 has a first surface on which illumination light emitted from the LED light source 30 is incident and an emission surface from which the illumination light is emitted to the printed matter P, and functions as a mirror that reflects, to the vicinity of the reading line TL of the printed matter P, light that does not contribute to the reading in a state in which the light guide plate 32 is not disposed, in the illumination light emitted from the LED light source 30.

The same configuration and the same disposition can be applied to the one light guide plate 32 and the other light guide plate 32 shown in Fig. 1. It should be noted that details of the structure of the light guide plate 32 and details of the disposition of the light guide plate 32 will be described below.

The transport device 16 comprises an upstream transport roller 40, a background roller 42, and a downstream transport roller 44. The upstream transport roller 40, the background roller 42, and the downstream transport roller 44 are disposed in an order of the upstream transport roller 40, the background roller 42, and the downstream transport roller 44 from an upstream side in the transport direction of the printed matter P.

The upstream transport roller 40 receives the printed matter P and transmits the printed matter P to the background roller 42. The background roller 42 supports the printed matter P on the reading line TL and transports the printed matter P along the transport direction of the printed matter P. The downstream transport roller 44 discharges the printed matter P transported from the background roller 42 from the reading device 10.

A color and a surface treatment that do not affect the reading of the printed matter P using the image reception device 12 are applied to a surface for supporting the printed matter P in the background roller 42.

Each of the upstream transport roller 40, the background roller 42, and the downstream transport roller 44 is coupled to a rotation shaft of a motor, and rotates in response to the rotation of the rotation shaft of the motor. It should be noted that the motor coupled to the upstream transport roller 40 and the like is not shown.

The reading device 10 comprises a reference plate 50 and a reference plate moving device 52. The reference plate 50 is a member that is read by using the image sensor 20 in a case of setting a reading condition of the image sensor 20. As the reference plate 50, a white reference plate in which a surface read by using the image sensor 20 is coated with white paint can be applied.

The reference plate moving device 52 comprises a moving mechanism 54 and a motor 56. The moving mechanism 54 supports the reference plate 50 to be movable between a retreat position of the reference plate 50 and a reading position of the reference plate 50. The moving mechanism 54 is coupled to a rotation shaft of the motor 56, and moves the reference plate 50 in response to an operation of the motor 56.

It should be noted that the reference plate 50 described in the embodiment is an example of a reference member. The reference plate moving device 52 described in the embodiment is an example of a reference member moving device.

The moving mechanism 54 comprises a guide groove bracket 60, a drive arm 62, and a drive force transmission shaft 64. The guide groove bracket 60 is disposed outside both ends of the illumination device 14 in the width direction, and supports the drive arm 62 to be movable and supports the drive force transmission shaft 64 to be rotatable.

The guide groove bracket 60 is formed with a first guide groove 66. The first guide groove 66 penetrates the guide groove bracket 60 in the thickness direction. The first guide groove 66 supports the reference plate bracket 70, which supports the reference plate 50, to be movable by using a first guide pin 68 and a second guide pin 74.

The rotation shaft of the motor 56 is coupled to the drive arm 62. One drive arm 62 and the other drive arm 62 are coupled to each other by using the drive force transmission shaft 64. The drive arm 62 swings in response to the operation of the motor 56. The drive arm 62 is formed with a second guide groove 72. The second guide groove 72 supports the reference plate bracket 70 to be movable at a position intersecting the first guide groove 66 by using the second guide pin 74 in response to the swinging of the drive arm 62.

The reference plate 50 supported by the reference plate bracket 70 is moved between the retreat position and the reading position in response to the operation of the motor 56. Fig. 1 shows a state in which the reference plate 50 is located at the retreat position.

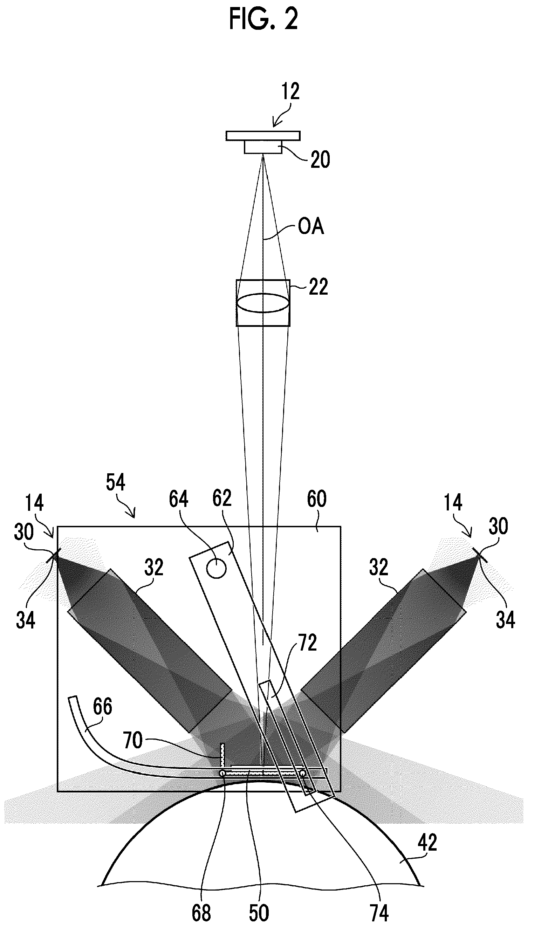

Fig. 2 is a view showing the reading device shown in Fig. 1 in a direction of an arrow A shown in Fig. 1. A direction penetrating the paper surface of Fig. 2 is the width direction of the printed matter P, the width direction of the LED light source 30, and the width direction of the light guide plate 32. It should be noted that, in Fig. 2, a part of the components shown in Fig. 1 is not shown. In addition, in Fig. 2, the light guide plate 32 hidden by the guide groove bracket 60, the light emitted from the light guide plate 32, and the like are shown in a see-through manner through the guide groove bracket 60.

Fig. 2 shows a state in which the reference plate 50 is moved to the reading position and stopped. The reference plate 50 is illuminated by using the illumination device 14, and a surface of the reference plate 50 is read by using the image reception device 12. Fig. 2 schematically shows the illumination light applied to the reference plate 50.

The illumination device 14 emits the illumination light that provides an illuminance in a defined range in the printed matter P, which is the reading target, for an illumination target area having a length equal to or longer than the entire width of the printed matter P in the width direction of the printed matter P, the length being a defined length in the transport direction of the printed matter P. It should be noted that the illumination target area is shown in Fig. 4 using the reference numeral AI.

[Electric configuration of reading device]

Fig. 3 is a functional block diagram showing an electric configuration of the reading device shown in Fig. 1. The reading device 10 comprises a system control unit 100. The system control unit 100 comprehensively controls the reading device 10.

The reading device 10 comprises a transport control unit 102. The transport control unit 102 controls an operation of the transport device 16 in response to a command signal transmitted from the system control unit 100. For example, the transport control unit 102 controls a transport speed or the like of the printed matter P.

The reading device 10 comprises an illumination control unit 104. The illumination control unit 104 controls an operation of the illumination device 14 in response to a command signal transmitted from the system control unit 100. For example, the illumination control unit 104 controls an amount of the illumination light emitted from the illumination device 14.

The reading device 10 comprises a reading control unit 106. The reading control unit 106 controls an operation of the image reception device 12 in response to a command signal transmitted from the system control unit 100. For example, the reading control unit 106 controls an operation of the image sensor 20.

The reading device 10 comprises a reference plate movement control unit 108. The reference plate movement control unit 108 controls an operation of the reference plate moving device 52 in response to a command signal transmitted from the system control unit 100.

The reading device 10 comprises an information acquisition unit 120. The information acquisition unit 120 acquires various information applied to the reading device 10. The system control unit 100 generates various command signals to various control units based on various information acquired by using the information acquisition unit 120.

The reading device 10 comprises a memory 122. The memory 122 stores various information acquired by using the information acquisition unit 120. The memory 122 stores a program for realizing various functions of the reading device 10. The memory 122 stores various parameters used in a case of executing the program.

[Hardware configuration for realizing electric configuration of reading device]

An electric configuration of the reading device 10 shown in Fig. 2 is realized by using a computer. That is, a processor provided in the computer executes a command of a program stored in a memory to realize various functions of the reading device 10.

[Problem of reading device]

There is a problem that it is desired to increase the amount of light reaching the image sensor 20 in the reading device 10 shown in Fig. 1. The following methods are considered to solve such a problem.

(1) The amount of light emitted from the LED element 34 is increased.

(2) The number of the LED elements 34 is increased even in a case of the LED elements 34 having the same amount of emitted light.

(3) The light emitted from the LED light source 30 is condensed by using a condenser lens or the like.

(4) The LED light source 30 is brought close to the reading line TL.

(5) The F-number of the image-forming lens 22 is reduced. It should be noted that the F-number is a focal length/lens diameter.

(6) Light that does not contribute to the reading in the light emitted from the LED light source 30 is reflected by using the mirror and is applied to the reading line TL.

Each of the above-described (1) to (6) has the following problem.

Problem of above-described (1)

In order to increase the amount of light emitted from the LED element 34, there is a method of using the LED element 34 having a high luminous efficiency or increasing a current supplied to the LED element 34. For example, a theoretical limit value of the luminous efficiency of a white LED in which a blue LED chip and a phosphor are combined is 260 lumens per watt to 300 lumens per watt, and an LED having the luminous efficiency equal to or greater than 200 lumens per watt has already been developed, and the luminous efficiency is close to the limit.

In addition, the LED having a high luminous efficiency increases the maximum amount of emitted light not in proportion to the luminous efficiency, but increases the luminous efficiency in an area of a relatively small amount of emitted light, and the total luminous flux is not necessarily increased and the illuminance is not necessarily increased.

In general, the LED having a high luminous efficiency is expensive, and the use of the LED having a high luminous efficiency results in a significant increase in cost. In addition, there is also a problem that an increase in the current supplied in a case of increasing the amount of emitted light promotes heat generation of the LED, and the luminous efficiency is lowered in a case of using the LED without sufficient cooling. Further, there is also a problem that it takes cost to cool the heated LED.

Problem of above-described (2)

The number of the LED elements 34 may be increased, and the illuminance of the illumination light on the reading line TL may be increased in proportion to the number of the LED elements 34, but the total amount of heat generated by all the LED elements 34 is also increased in proportion. In this case, there is a problem that the cooling is costly as in the above-described (1).

In addition, even in a case in which the number of the LED elements 34 is increased, the LED light source 30 should be disposed inside the reading device 10, but there is a concern that it is difficult to dispose the LED light source 30 inside the reading device 10, for example, in a case in which the number of the LED elements 34 is doubled for the purpose of doubling the amount of emitted light.

Problem of above-described (3)

A method of condensing the light emitted from the LED light source 30 on the reading line TL by using the condenser lens is generally used. In a case in which a large printed matter P, such as the printed matter P having a width equal to or longer than 600 millimeters and equal to or shorter than 1200 millimeters, is used as the reading target, it is difficult to irradiate the printed matter P with the illumination light without generating large unevenness in the illumination light over the total length of the width.

In a case in which the light from as many LED light sources 30 as possible is condensed by using the condenser lens or the like, it is necessary to relatively increase a numerical aperture of the condenser lens. In addition, in order to relatively increase the illuminance of the illumination light on the reading line TL, it is necessary to relatively reduce the focal length of the lens and to collect the light in a relatively narrow range.

Although an aspherical condenser lens, a rod lens, or the like has been put into practical use as the condenser lens that satisfies the above-described condition, in a case of illuminating a large printed matter P having a width equal to or longer than 600 millimeters and equal to or shorter than 1200 millimeters, the condenser lens having a length equal to the width of the printed matter P is required. In such a long lens, the manufacturing accuracy of the lens and the attachment accuracy of the lens are problems.

Problem of above-described (4)

In a case of the LED light source 30 is an LED array provided with the plurality of LED elements 34, the light emitted from each LED element 34 is strongest on a front surface of the LED element 34 and is weakened as the light goes in the oblique direction. In a case in which the LED light source 30 is brought close to the reading line TL, the illuminance unevenness on the reading line TL is relatively large due to an emission distribution of each LED element 34.

Problem of above-described (5)

Although it is possible to open a stop of the image-forming lens 22 shown in Fig. 1 and set the F-number to $(1/2)^{1/2}$ times to equalize the charge accumulation amount of image sensor, as a result of opening the stop of the image-forming lens 22, the focal depth may be relatively shallow or the aberration may be large. This method is not preferable in a case in which the printed matter P or the like is read at a high resolution.

Problem of above-described (6)

In a case in which the light is reflected by using the mirror, a deviation in a position illuminated with the reflected light may occur in a case in which an angle of a mirror surface and a position of the mirror deviate. Therefore, it is necessary to support the mirror with high accuracy.

The illumination device 14 provided in the reading device 10 according to the present embodiment creates the light guide plate 32 using a plate-shaped member made of an acrylic resin having high transparency as the mirror based on the method of the above-described (6), and efficiently reflects the light using the total reflection of the light guide plate 32 to illuminate the printed matter P.

[Object]

In the illumination device 14 applied to the reading device 10 that uses the diffused light of the LED light source 30 to the printed matter P, which is the reading target, as the illumination light by using the light guide plate 32, and takes in and out the reference plate 50 with respect to the reading line TL, a configuration of the light guide plate 32 that is disposed to be separated from the reading line TL by a defined distance and realizes the efficient use of the illumination light using the total reflection, and a method of fixing the light guide plate 32 in which the influence on the total reflection is suppressed are provided.

[Detailed description of illumination device]

Fig. 4 is a schematic view showing a configuration example of the illumination device shown in Fig. 1. A direction penetrating the paper surface of Fig. 4 is the width direction of the LED light source 30 and the width direction of the light guide plate 32.

Fig. 4 shows the LED light source 30 provided with a point light source such as the LED element 34, as the light source. The light source applied to the illumination device 14 may be a line light source, a diffused light source having a relatively small light emission surface, or a light source in which the diffused light sources having relatively small light emission surfaces are disposed in a two-dimensional manner. The term "relatively small" means that the area is equal to the first surface 33, which is the surface on which the light of the light guide plate 32 is incident, in the width direction of the light guide plate 32, or is smaller than the first surface 33 of the light guide plate 32.

For the illumination device 14, the illumination target area AI in the printed matter P is defined, and a distance between the LED light source 30 and the illumination target area AI is defined. The light guide plate 32 is disposed between the LED light source 30 and the illumination target area AI. The light guide plate 32 has a reflecting surface 32A that totally reflects at least a part of the incident light.

Fig. 4 schematically shows rays calculated by using ray tracing. It should be noted that, in Fig. 4, for the purpose of making the rays easy to see, the density of the rays is lowered, and a representative ray is shown among the rays representing the light applied from the LED light source 30 to the illumination target area AI via the light guide plate 32.

It should be noted that the schematic view of the rays calculated by using the ray tracing of the light guide plate 32 shown in Fig. 4 is a schematic view of the rays in any cross section in which a cross-sectional line along the length direction of the light guide plate 32 is applied.

The light guide plate 32 shown in Fig. 4 is made of an acrylic resin and has a refractive index of 1.49. A total length B of the light guide plate 32 in the length direction can be 40 millimeters, and a total length W of the light guide plate 32 in the thickness direction can be 4.0 millimeters.

In addition, a distance L from the emission surface 35 of the LED light source 30 to the illumination target area AI can be 48.75 millimeters, the distance from the emission surface of the LED light source 30 to the first surface 33 of the light guide plate 32 can be 2.25 millimeters, and a distance $L_e$ from the emission surface 35 of the light guide plate 32 to the illumination target area AI can be 2.25 millimeters. A shortest distance from the emission surface 35 of the LED light source 30 to the illumination target area AI can be applied to the distance L from the emission surface 35 of the LED light source 30 to the illumination target area AI. The same applies to the distance $L_e$ from the emission surface 35 of the light guide plate 32 to the illumination target area AI.

In the calculation example of the rays shown in Fig. 4, light $R_a$ that is not reflected by the reflecting surface 32A of the light guide plate 32 and reaches the reading line TL from the LED light source 30 exists. In addition, light $R_b$ that is reflected once by the reflecting surface 32A of the light guide plate 32 and light $R_c$ that is reflected twice by the reflecting surface 32A of the light guide plate 32 reach the reading line TL.

In the light reflected twice by the reflecting surface 32A of the light guide plate 32, light $R_d$ having a relatively large incidence angle with respect to the reflecting surface 32A passes through the end of the emission surface 35 of the light guide plate 32 and reaches a position away from the reading line TL in the illumination target area AI.

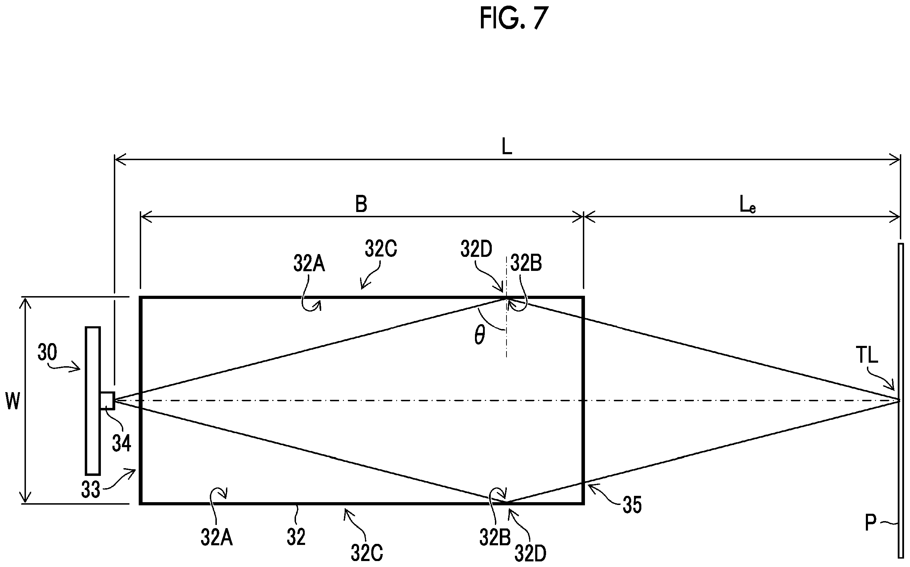

Here, the incidence angle with respect to the reflecting surface 32A is an angle formed by the normal line of the reflecting surface 32A and the light. In Fig. 4, the incidence angle with respect to the reflecting surface 32A is not shown. The incidence angle with respect to the reflecting surface 32A is shown in Fig. 7 using reference numeral $\theta$.

In a case in which the calculation is performed with a slightly higher ray density than the calculation example shown in Fig. 4, the existence of the next light can be understood. Light having an angle of emission from the LED light source 30 greater than the light $R_d$ shown in Fig. 4 is reflected three times just by the end of the emission surface 35 of the light guide plate 32, and is applied to the reading line TL.

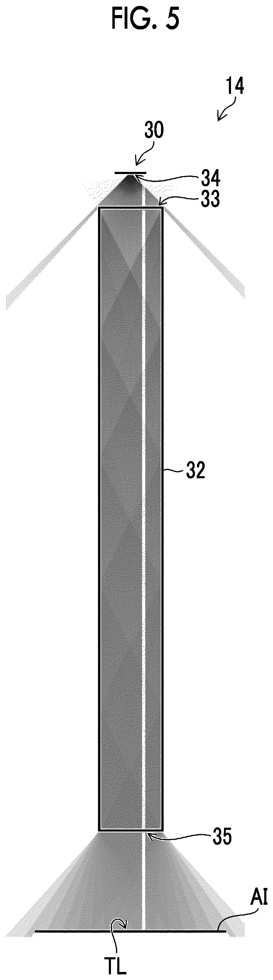

Fig. 5 is a schematic view in a case in which the ray density shown in Fig. 4 is increased. Fig. 5 is a diagram in which the ray density is increased as compared with the calculation example shown in Fig. 4, and a continuous distribution of light can be understood. The reason why the light emitted from the emission surface 35 of the light guide plate 32 is seen as a step having a gradation in Fig. 5 is as follows. In a case in which the light emitted by the reflection of one to five times inside the light guide plate 32 and the light emitted without being reflected inside the light guide plate 32 pass through the same path, the light is relatively strongly displayed.

In Fig. 5, in a case in which the reaching position of the rays that are reflected three times inside the light guide plate 32 is confirmed, the rays reach a position slightly away from the reading line TL. In a case in which the illumination target area AI is moved 1 millimeter to the side of the light guide plate 32 to bring the illumination target area AI close to the light guide plate 32, the rays that are reflected three times inside the light guide plate 32 reach the reading line TL.

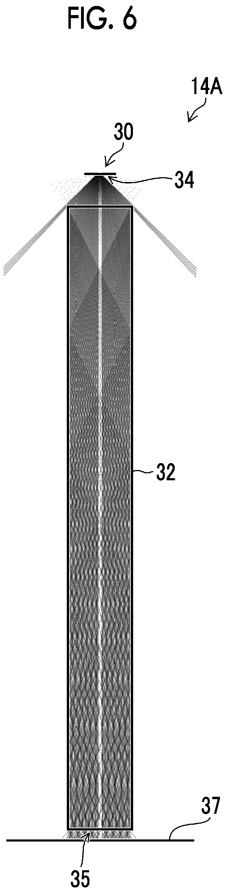

Fig. 6 is a schematic view of an example in which the emitted light of the light guide plate is made incident on the diffusion plate. As the configuration example of the illumination using the light guide plate 32, there is an illumination in which the illumination target area AI of the illumination light is narrowed to a narrow range. For example, the printed matter, such as paper, is irradiated with the reflected illumination light, a direction orthogonal to the disposition direction of the reading element of the image sensor is applied in a case in which a narrow range is read. An illumination device 14A shown in Fig. 6 can be applied to the illumination for narrowing down the illumination target area AI of the illumination light to a narrow range.

As another configuration example of the illumination using the light guide plate 32, there is a diffusion illumination having a relatively uniform light amount distribution. The illumination device 14A shown in Fig. 6 causes the light emitted from the LED light source 30 to be reflected zero to several times in the light guide plate 32 to generate the light having a uniform light amount distribution for the entire width of the emission surface 35, and emits the diffused light through the diffusion plate 37 disposed at a position close to the emission surface 35.

The illumination device 14A functions as a backlight illumination in a case in which the printed matter in which a transparent substrate is used is irradiated with the transmitted illumination light and the transmitted light of the printed matter is read by using the image sensor. The illumination device 14A can be used as the diffusion illumination using the area sensor.

In a case of designing the light guide plate 32, a method of repeating precise ray tracing shown in Figs. 4 to 6 can be adopted, an appropriate numerical value at which a relatively large amount of totally reflected light can be used can be derived using a simple method for the dimensions of the light guide plate 32, the disposition, and the position of the light guide plate 32 to be supported. Hereinafter, a configuration example of the light guide plate 32 in which an appropriate numerical value at which a relatively large amount of totally reflected light can be used can be derived will be described in detail.

[Disposition example of light guide plate]

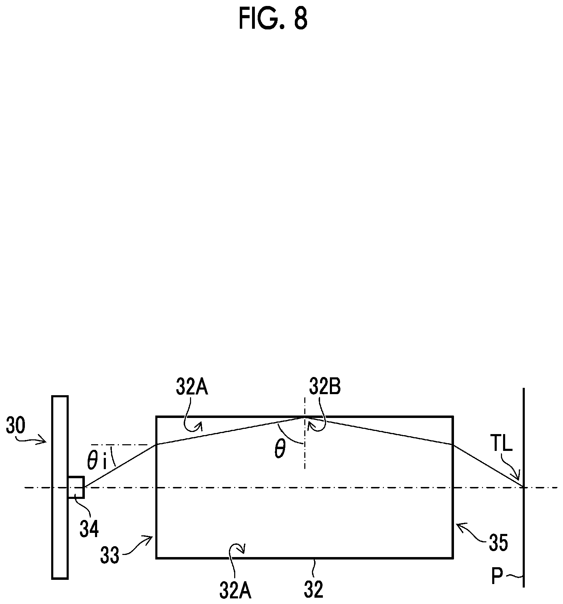

Fig. 7 is a schematic view showing a disposition example of one light guide plate. Fig. 7 shows an approximate solution of a trajectory of the rays. The approximate solution of the trajectory of the rays uses the fact that an optical path length of the light traveling in the medium of the refractive index $n_1$ and the refractive index $n_2$ is proportional to the refractive index, and in a case in which $\theta$ is large, a distance from the emission surface of the LED light source 30 to the first surface 33 of the light guide plate 32 and a distance from the emission surface 35 of the light guide plate 32 to the illumination target area AI are drawn to be longer by a ratio $n_2/n_1$ between the refractive index $n_1$ of air and the refractive index $n_2$ of the light guide plate 32, or a distance from the first surface 33 of the light guide plate 32 to the emission surface 35 of the light guide plate 32 is drawn to be shorter by the ratio $n_1/n_2$ of the refractive index, so that the position of the reflection position 32B of the reflecting surface 32A of the light guide plate 32 can be obtained by approximation. Fig. 8 is an explanatory view of the incidence angle with respect to the first surface of the light guide plate and the incidence angle with respect to the reflecting surface. Fig. 8 shows a strict solution of the trajectory of the rays based on the law of refraction, unlike Fig. 7. It should be noted that a direction penetrating the paper surface in Figs. 7 and 8 is the width direction of the light guide plate 32.

Fig. 7 shows an example in which the size in the length direction and the disposition in the length direction of the light guide plate 32 having a length in the width direction corresponding to one LED element 34 among the plurality of LED elements 34 are defined.

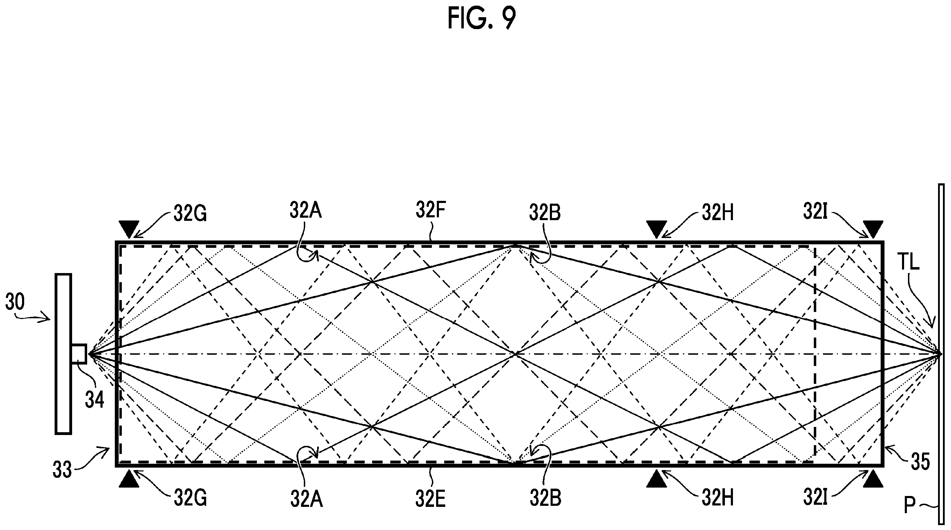

Reference numeral L shown in Fig. 7 is the shortest distance from the emission surface of the LED light source 30 to the illumination target area AI. In Fig. 7, a length indicated by the reference numeral L is shown as the shortest distance from the center of the emission surface of the LED element 34 to the reading line TL. It should be noted that, in Fig. 7, the illumination target area AI is not shown. The same applies to Figs. 8 and 9.

Reference numeral B indicates the total length of the light guide plate 32 in the length direction, and reference numeral $L_e$ indicates the shortest distance from the emission surface 35 of the light guide plate 32 to the illumination target area AI. In Fig. 7, the length indicated by reference numeral $L_e$ is shown as the shortest distance from the center of the emission surface 35 of the light guide plate 32 to the reading line TL.

The refractive index of the periphery of the light guide plate 32 is denoted by $n_1$, and the refractive index of the light guide plate 32 is denoted by $n_2$. As the refractive index $n_1$, 1 as a refractive index of air can be applied. In a case in which the material of the light guide plate 32 is an acrylic resin, 1.49 can be applied to the refractive index $n_2$ of the light guide plate 32.

A critical angle $\theta_t$ of the light guide plate 32 is represented by $\theta_t = \arcsin(n_1/n_2)$. It should be noted that arcsin is an inverse function of sin. The incidence angle of the light guide plate 32 with respect to the first surface 33 is denoted by $\theta_i$, and the incidence angle of the light guide plate 32 with respect to the reflecting surface 32A is denoted by $\theta$. The incidence angle $\theta$ with respect to the reflecting surface 32A is equal to or greater than the critical angle $\theta_t$. The incidence angle $\theta_i$ with respect to the first surface 33 is an angle formed by the normal line of the first surface 33 and the light incident on the first surface 33. Here, ° is applied as a unit of the angle. The unit of the angle is added as needed.

In a case in which the incidence angle $\theta$ with respect to the reflecting surface 32A is represented by $\theta° = 90° - \arcsin\{(n_1/n_2) \times \sin\theta_i\}$, a distance in which the light incident on the light guide plate 32 travels in the optical axis direction of the LED element 34 after one reflection is represented by $W \times \tan\theta$. It should be noted that an entire area from the emission surface of the LED light source 30 to the illumination target area AI is converted as a medium of the refractive index of the light guide plate 32 as an approximate solution.

The maximum number of reflections $C_m$ of the light guide plate 32 is represented by $C_m = INT[\{B + (L - B) \times (n_2/n_1)\}/(W \times \tan\theta_t)]$. It should be noted that INT in the above expression indicates a function of rounding down a decimal point of a numerical value and converts the numerical value into an integer.

In a case in which the number of reflections C equal to or less than the maximum number of reflections $C_m$ is defined as the number of reflections C of the light guide plate 32, the maximum incidence angle $\theta_{imax}$ with respect to the first surface 33 of the light guide plate 32 is determined. The maximum incidence angle $\theta_{imax}$ is represented using Expression 1. It should be noted that arctan in Expression 1 is an inverse function of tan. It should be noted that "equal to or less than maximum number of reflections $C_m$" described in the embodiment is an example of "equal to or less than the maximum number of reflections".

$$\theta_{imax} = \arctan[\{B + (L - B) \times (n_2/n_1)\}/(C \times W)] \; ... \; \text{Expression 1}$$

In a case in which the reflection is performed C times in the light guide plate 32 and the C-th reflection position, which is the last reflection, is the emission surface 35 which is the end of the light guide plate 32 in the length direction, an index value Lt representing the distance from the emission surface 35 to the reading line TL is represented by $Lt = \{(1/2) \times (n_1/n_2) \times W\}/\tan\theta_{imax}$.

That is, the distance $L_e$ from the emission surface 35 of the light guide plate 32 to the illumination target area AI is equal to or less than the index value Lt, and the distance from the LED light source 30 to the first surface 33 of the light guide plate 32 is also equal to or less than the index value Lt. Therefore, the total length B of the light guide plate 32 in the length direction is represented by $L - 2 \times L_t \le B$ using the distance L from the emission surface of the LED light source 30 to the illumination target area AI along with the index value Lt. $L - 2 \times L_t \le B$ is represented as Expression 2 in a case of being deformed by using the total length W of the light guide plate 32 in the thickness direction, the refractive index $n_1$ of the

periphery of the light guide plate, the refractive index $n_2$ of the light guide plate, and the maximum incidence angle $\theta_{imax}$.

$$L - (n_1/n_2) \times W/\tan\theta_{imax} \leq B \,... \text{ Expression 2}$$

The number of reflections C equal to or less than the maximum number of reflections $C_m$ is defined, and the maximum incidence angle $\theta_{imax}$ is derived by using Expression 1. In a case in which the total length B of the light guide plate 32 in the length direction does not satisfy Expression 2 during the derivation of the maximum incidence angle $\theta_{imax}$, the size of the light guide plate 32, such as the total length B of the light guide plate 32 in the length direction or the total length W of the light guide plate 32 in the thickness direction, is changed, or the number of reflections C is changed.

The above-described calculation method is an approximate expression under the condition in which the maximum incidence angle $\theta_{imax}$ is relatively small, but the approximate design of the dimensions and the disposition of the light guide plate 32 can be performed by using the above-described calculation result, and the design of the light guide plate 32 can be determined by accurately calculating the reflection position after the approximate design.

[Example of support position of light guide plate]

In a case in which a surface opposite to the reflecting surface 32A is supported from the outside during fixation of the light guide plate 32 using the total reflection, there is a possibility that the total reflection does not occur depending on the refractive index of the support member closely attached to the support position, and the amount of light emitted from the light guide plate 32 may be decreased.

Further, in a case in which the support positions of the light guide plate 32 are discretely set in the width direction of the light guide plate 32, a decrease in the local amount of emitted light of the light guide plate 32 occurs due to the discrete disposition of the support positions, and the non-uniformity in the illuminance distribution occurs in the illumination target area AI.

In the illumination device 14 in which the light emitted from the LED light source 30 is efficiently used by using the light guide plate 32, the method of supporting the light guide plate 32 in a manner of suppressing a decrease in the illumination efficiency and suppressing a non-uniformity of the illuminance distribution is required. In particular, in a case in which the light guide plate 32 is used under the condition in which the number of reflections is about one or two, the contribution of the amount of light for each number of reflections to the illuminance is relatively large, and the presentation of the support method of the light guide plate 32 that can suppress the influence of the reflection is useful.

Hereinafter, a preferable support method of the light guide plate 32 will be mainly described with reference to Figs. 7 and 9. Fig. 7 schematically shows light in a case in which the number of reflections is one. Fig. 9 schematically shows light in a case in which the number of reflections is one and light in a case in which the number of reflections is two or more. In Fig. 9, the rays in a case in which the number of reflections is one and two are shown by using a solid line, the light in a case in which the number of reflections is three is shown by using a dotted line, and the light in a case in which the number of reflections is four and five is shown by using a broken line.

In Figs. 7 and 9, in order to facilitate the consideration, the total length B of the light guide plate 32 in the length direction is reduced to $1/n_2$ times by using the refractive index $n_2$ of the light guide plate 32, and it is possible to show a state in which the rays on the first surface 33 and the emission surface 35 of the light guide plate 32 substantially travel straight as an approximate solution.

In a case in which the total length B of the light guide plate 32 in the length direction is reduced to $1/n_2$ times, the actual length of the light guide plate 32 is $n_2$ times that of the shown example. In addition, in the actual distance from the LED light source 30 to the reading line TL, the total length B in the length direction of the light guide plate 32 is $n_2$ times that of the shown example. It should be noted that, in Figs. 7 and 9, a state in which the light on the first surface 33 and the emission surface 35 of the light guide plate 32 substantially travels straight is schematically shown.

Fig. 7 shows a state in which light of which the number of reflections is one inside the light guide plate 32 reaches the reading line TL. In the example shown in Fig. 7, the distance L from the light guide plate 32 to the illumination target area AI is relatively large, and the emission surface 35 of the light guide plate 32 is relatively far from the illumination target area AI, and there is no light of which the number of reflections is two or more and that reaches the reading line TL.

In Fig. 7, the reflection position 32B of the light inside the light guide plate 32 is as shown, and during fixation of the light guide plate 32, the light guide plate 32 is supported while avoiding a reflection corresponding position 32D of an outer side surface 32C of the light guide plate 32 corresponding to the reflection position 32B.

Fig. 9 shows a configuration in a case in which the distance L from the emission surface 35 of the light guide plate 32 to the illumination target area AI can be made relatively narrow. In Fig. 9, in a light guide plate 32E shown by a solid line, the light of which the number of reflections is one to five reaches the reading line TL. In addition, in a light guide plate 32F shown by a broken line, light of which the number of reflections is one to three reaches the reading line TL.

In any case, a support position 32G, a support position 32H, and a support position 32I are positions of outer side surfaces corresponding to non-reflection positions, and the positions of the reflecting surfaces 32A corresponding to the support position 32G, the support position 32H, and the support position 32I are the non-reflection positions different from the reflection position 32B. Therefore, during fixation of the light guide plate 32, the support position 32G, the support position 32H, and the support position 32I may be supported.

Specifically, in a case in which the number of reflections is one, during fixation of the light guide plate 32, the support position 32H, which is a position between the reflection position 32B and an end portion of the light guide plate 32 on the emission surface 35 side, is supported.

In a case in which the number of reflections is two or more, during fixation of the light guide plate 32, the support position 32H corresponding to the non-reflection position having the longest distance between the adjacent reflection positions 32B is supported.

In a case in which the number of reflections is two or more, during fixation of the light guide plate 32, in a case in which a distance between the reflection position 32B closest to the emission surface 35 and the emission surface 35 is longer than a distance between the adjacent reflection positions 32B, the support position 32I corresponding to the non-reflection position between the reflection position 32B closest to the emission surface 35 and the emission surface 35 is supported.

In a case in which the number of reflections is two or more, the non-reflection position at which the density of light is relatively low is supported during fixation of the light guide plate 32. For example, a distance between the adjacent reflection positions 32B is denoted by $D_i$. i is an integer that is equal to or greater than 1 and is an integer equal to or less than all the reflection positions 32B.

An average value $\theta_a$ of the incidence angles $\theta$ for each of the adjacent reflection positions 32B is calculated, and $D_i \times \cos\theta_a$ is calculated. A distance between the reflection position 32B closest to the emission surface 35 and the emission surface 35 is denoted by $D_1$, an incidence angle of the reflection position 32B closest to the emission surface 35 is denoted by $\theta_1$, and $D_i \times \cos\theta_1$ is calculated.

$D_i \times \cos\theta_a$ and $D_i \times \cos\theta_1$ are expressions corresponding to the density of light, and the non-reflection position at which the maximum value of $D_i \times \cos\theta_a$ and $D_i \times \cos\theta_1$ is obtained corresponds to the non-reflection position at which the density of light is relatively low.

[Specific example of light guide plate]

[Case in which light emitted from light guide plate reaches reading line]

A case will be considered in which the distance L from the LED light source 30 to the illumination target area AI is 50 millimeters and the total length W of the light guide plate 32 in the thickness direction is 10 millimeters. In a case in which the distance L from the LED light source 30 to the illumination target area AI is 50 millimeters, the practical total length B of the light guide plate 32 in the length direction is equal to or longer than 40.8 millimeters and shorter than 50 meters.

In a case in which the periphery of the light guide plate 32 is air and the material of the light guide plate 32 is an acrylic resin, the refractive index $n_1$ is 1, the refractive index $n_2$ is 1.49, and the critical angle $\theta_t$ is 42.2°. The maximum number of reflections $C_m$ of the light guide plate 32 calculated by applying the above-described condition is five.

In a case in which the LED element 34 is used as the light source, light having a relatively large number of reflections has a low intensity of light emitted from the light source in the oblique direction. The light having a relatively large number of reflections has a relatively small amount of light in the first place in terms of the amount of light per unit angle, and a proportion to the light reaching the reading line TL is relatively small.

Therefore, in a case in which the number of reflections is relatively large, it is possible to set an intermediate position of the reflection position 32B of the light as the support position 32G of the light guide plate 32, and to suppress the occurrence of the unevenness of the illumination light caused by the inhibition of the reflection generated by the support member closely attached to the light guide plate 32 at the support position 32G Further, it is possible to make the size of the support member relatively small to suppress the influence of the support member on the unevenness of the illumination light.

In a case in which the total length B of the light guide plate 32 in the length direction is shorter than the maximum value of the total length B of the light guide plate 32 in the length direction calculated by using Expression 2, the number of reflections that can be used is reduced. The number of reflections that can be used can be calculated by using the expression representing the maximum number of reflections $C_m$.

[Case in which light emitted from light guide plate is diffused by using diffusion plate]

In a case in which illumination light is used as the transmission illumination, the illumination device 14A that comprises the diffusion plate 37 shown in Fig. 6 and generates the backlight is applied. In a case in which the diffusion plate 37 is not provided, fine unevenness can be formed on the emission surface 35 of the light guide plate 32 within a range of the numerical aperture of the image-forming lens 22 shown in Fig. 1, and diffusivity can be imparted to the emission surface 35 of the light guide plate 32. As a result, it is possible to reduce the unevenness of the illumination light. An area in which the fine unevenness is not formed on the emission surface 35 of the light guide plate 32 can be a smooth surface and can be transparent. It should be noted that the diffusion plate 37 described in the embodiment is an example of a diffusion member.

On the emission surface 35 of the light guide plate 32, light having a large number of reflections in the light that pass through a position away from a line connecting the LED element 34 and the reading line TL is emitted from the emission surface 35 more obliquely. This light is applied from the position away from the line connecting the LED element 34 and the reading line TL to ink constituting the printed matter P, is diffused by using the components of the ink, generates components diffused within the range of the numerical aperture of the image-forming lens 22, and functions as the illumination light.

In a case in which the minute unevenness is formed on the emission surface 35 of the light guide plate 32, a protrusion having a triangular cross-sectional shape may be formed in the area in which the minute unevenness is not formed, and the light emitted from the emission surface 35 may be refracted toward the reading line TL.

[About attachment error of light guide plate]

In a case in which a shift error in which the fixation position of the light guide plate 32 deviates in parallel in the length direction of the light guide plate 32 exists, the deviation of the reflection position 32B of the light guide plate 32 may occur. In a case in which the light guide plate 32 deviates from the line connecting the LED light source 30 and the reading line TL in the vertical direction, the reaching position of the light deviates by a distance twice the amount of deviation of the light guide plate 32 from the reading line TL. Therefore, a relationship between an allowable range of an attachment error of the light guide plate 32 and the setting of the fixation position is defined.

[Modification example of light guide plate]

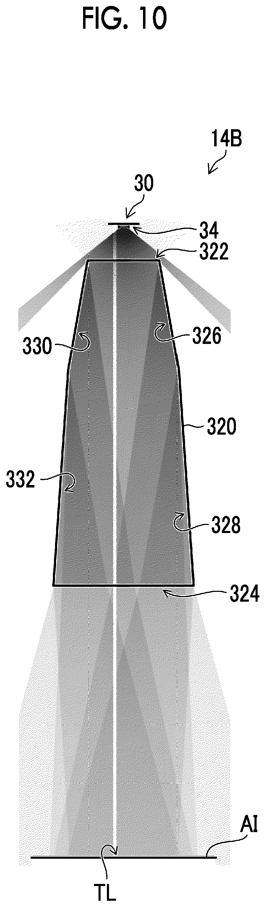

Fig. 10 is a cross-sectional view of the light guide plate in a case in which a cross-sectional shape is hexagonal. The illumination device 14B shown in Fig. 10 comprises a light guide plate 320 instead of the light guide plate 32 shown in Fig. 4 and the like. The light guide plate 320 comprises a first surface 322, which is a surface on which light is incident, and an emission surface 324. The first surface 322 and the emission surface 324 are parallel to each other.

The light guide plate 320 comprises, between the first surface 322 and the emission surface 324, a first reflecting surface 326, a second reflecting surface 328, a third reflecting surface 330, and a fourth reflecting surface 332. The first reflecting surface 326 and the second reflecting surface 328 form a continuous surface, and the third reflecting surface 330 and the fourth reflecting surface 332 form a continuous surface.

The reflecting surface formed by the first reflecting surface 326 and the second reflecting surface 328 and the reflecting surface formed by the third reflecting surface 330 and the fourth reflecting surface 332 face each other. That is, the light guide plate 320 has a structure in which non-parallel reflecting surfaces facing each other are provided from the first surface 322 toward the emission surface 324, and a distance between the two reflecting surfaces facing each other is increased. In other words, the light guide plate 320 has a cross-sectional shape in which one lower base and the other upper base of two trapezoids are connected to each other.

The light guide plate 320 can irradiate the illumination target area AI with the light incident from the first surface 322 and emitted from the emission surface 324 without being reflected by the reflecting surface, such as the first reflecting surface 326, and the light reflected by the reflecting surface, such as the first reflecting surface 326.

The light guide plate 320 can emit a light amount close to 5 times the light amount in a case in which only the light incident from the first surface 322 and emitted from the emission surface 324 without being reflected by the reflecting surface, such as the first reflecting surface 326, is emitted. In addition, the light guide plate 320 adopts a structure in which the distance between the two reflecting surfaces facing each other is increased from the first surface 322 toward the emission surface 324, and the distance $L_e$ from the emission surface 324 to the illumination target area AI can be made relatively long.

Although Fig. 10 shows the light guide plate 320 in which the distance between the two reflecting surfaces facing each other is increased in two stages from the first surface 322 toward the emission surface 324, the light guide plate 320 may be applied with a configuration in which the distance between the reflecting surfaces is increased in multiple stages, or may be applied with a configuration in which the distance between the reflecting surfaces is increased continuously.

[Detailed description of reference plate moving device]

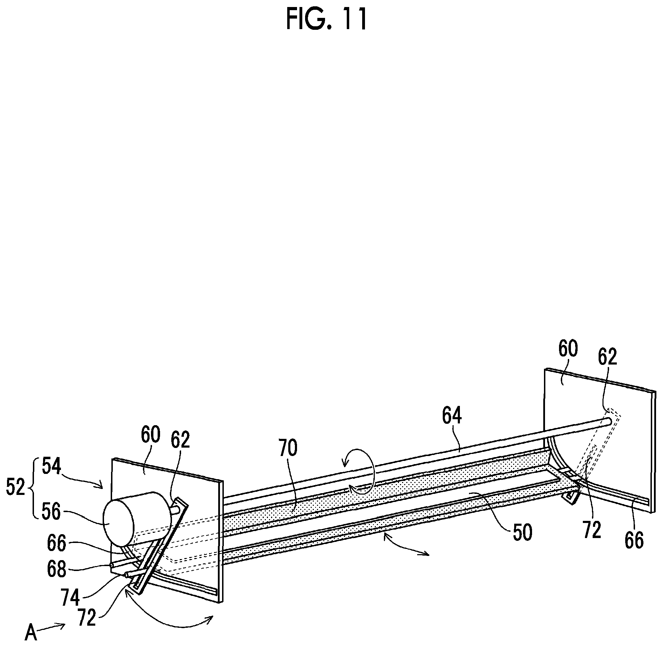

Fig. 11 is a perspective view showing a schematic configuration of the reference plate moving device. Fig. 11 shows the reference plate moving device 52 pulled out from the reading device 10 shown in Fig. 1. Here, the duplicate description with the description with reference to Fig. 1 will be omitted as appropriate.

In Fig. 11, an arrow line shown in the vicinity of the reference plate 50 indicates a moving direction of the reference plate 50. An arrow line shown in the vicinity of the drive arm 62 indicates a swing direction of the drive arm 62. An arrow line shown in the vicinity of the drive force transmission shaft 64 indicates a rotation direction of the drive force transmission shaft 64.

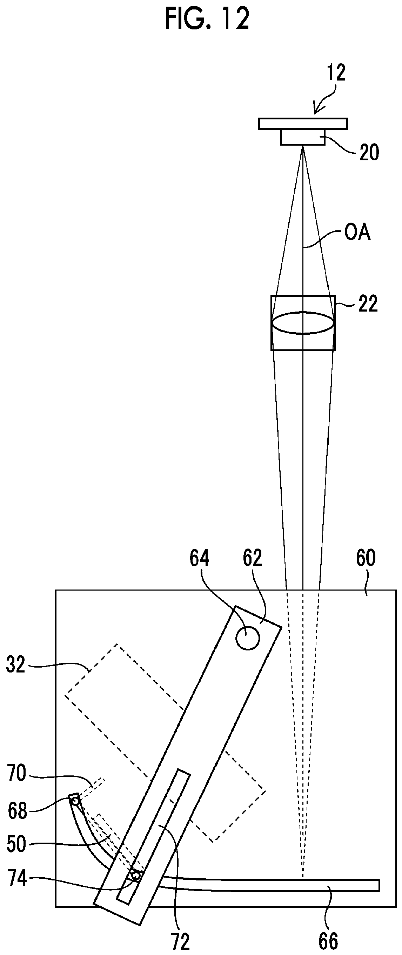

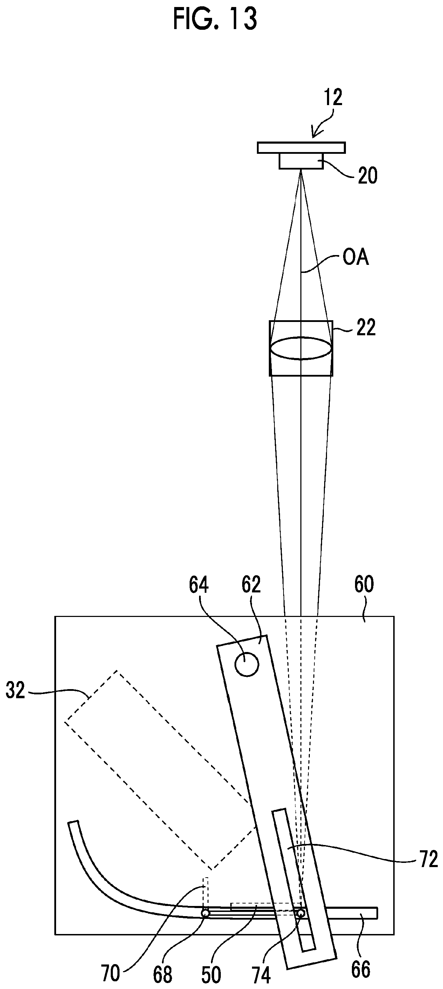

Fig. 12 is a schematic view showing a standby state of the reference plate. Fig. 12 is a view in a direction of an arrow A shown in Fig. 11. The same applies to Figs. 13 to 15. It should be noted that, in Figs. 12 to 15, the components of the reference plate moving device 52, such as the motor 56, shown in Fig. 11 are not shown.

The standby state of the reference plate 50 shown in Fig. 12 is a state in which the reading of the printed matter P is performed by using the image reception device 12. It should be noted that the position of the reference plate 50 in the standby state of the reference plate 50 described in the embodiment is an example of a retreat position at which the reference member retreats from the reading position.

Fig. 13 is a schematic view showing a state in which the reference plate reaches a reading start position. Fig. 13 shows a state in which one end of the reference plate 50 in a lateral direction reaches the reading position of the image sensor. The illumination device 14 starts the irradiation with the illumination light until the reference plate 50 reaches the reading start position, and stabilizes the amount of emitted light by the LED element 34 reaching the equilibrium temperature. In addition, the image reception device 12 starts reading the reference plate 50 at a timing at which the reference plate 50 reaches the reading start position.

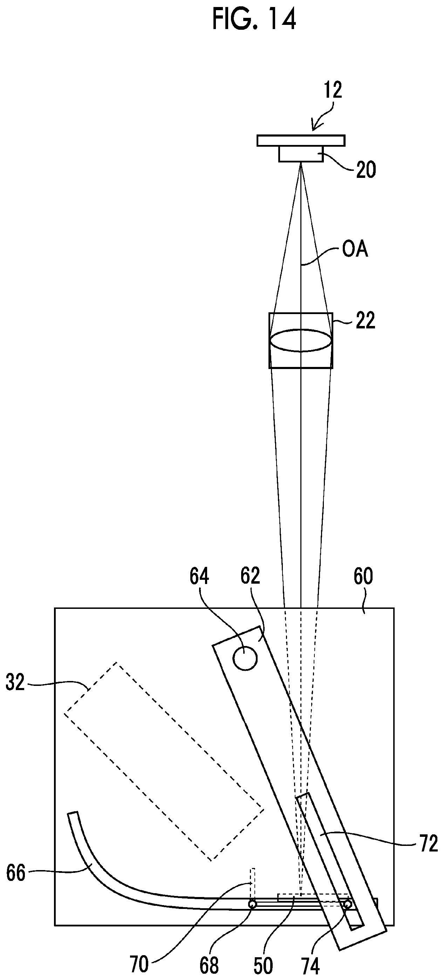

Fig. 14 is a schematic view showing a state in which the reference plate reaches a reading central position. Fig. 14 shows a state in which a central position of the reference plate 50 in the lateral direction reaches the reading position of the image reception device 12. The illumination device 14 continues the irradiation with the illumination light at a timing at which the reference plate 50 reaches the reading central position. The image reception device 12 continues to read the reference plate 50 at the timing at which the reference plate 50 reaches the reading central position.

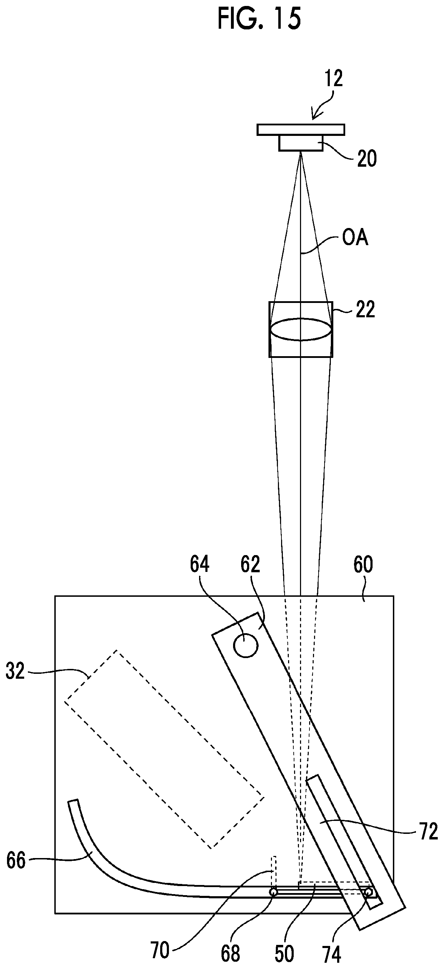

Fig. 15 is a schematic view showing a state in which the reference plate reaches a reading end position. Fig. 15 shows a state in which the other end of the reference plate 50 in the lateral direction reaches the reading position of the image sensor. The illumination device 14 can end the irradiation with the illumination light after the reference plate 50 reaches the reading end position. In addition, the image reception device 12 can end the reading of the reference plate 50 after the reference plate 50 reaches the reading end position.

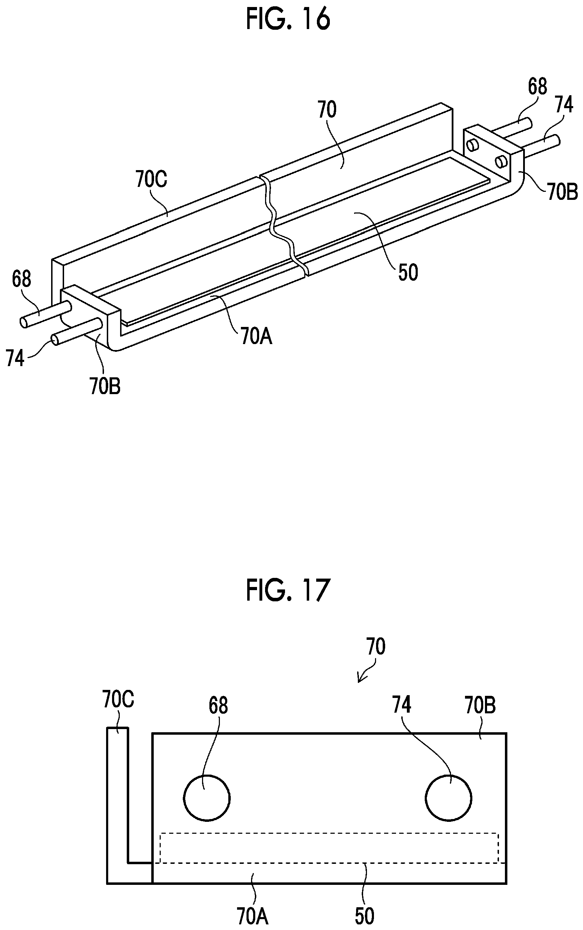

Fig. 16 is a perspective view of the reference plate bracket. Fig. 17 is a side view of the reference plate bracket. The reference plate bracket 70 comprises a reference plate fixing portion 70A, a guide pin attachment portion 70B, and a bent portion 70C. The reference plate bracket 70 shown in Fig. 16 can be manufactured by bending three sides of a plate member, such as a metal plate, at right angles.

The reference plate 50 is fixed to the reference plate fixing portion 70A. The fixing of the reference plate 50 to the reference plate fixing portion 70A may be performed by applying adhesion using an adhesive or the like, or by applying screwing using a screw. The reference plate fixing portion 70A may be painted white, and the reference plate fixing portion 70A is used as the reference plate 50.

The first guide pin 68 and the second guide pin 74 are attached to the guide pin attachment portion 70B. The first guide pin 68 is inserted into the first guide groove 66, and the second guide pin 74 is inserted into the first guide groove 66 and the second guide groove 72. As a result, the reference plate bracket 70 is supported to be swingable with respect to the guide groove bracket 60.

The bent portion 70C has a function of improving the rigidity in a longitudinal direction of the reference plate bracket 70 and suppressing the deflection in the longitudinal direction of the reference plate bracket 70. Figs. 16 and 17 show the bent portion 70C bent perpendicularly to the reference plate fixing portion 70A, but the angle of the bent portion 70C with respect to the reference plate fixing portion 70A may be less than 90° or may be more than 90°.

A length of the reference plate 50 in the longitudinal direction is equal to or longer than a length that can be read by the image sensor 20, and in a case in which the length of the reference plate 50 in the longitudinal direction is 450 millimeters, the length of the reference plate bracket 70 in the longitudinal direction can be 470 millimeters.

A length of the reference plate 50 in the lateral direction is defined from the viewpoint of avoiding the contact with the light guide plate 32 or the like in a case of moving the reference plate 50. The length of the reference plate 50 in the lateral direction may also be defined by taking into account the reading resolution and the reading period of the image sensor 20. In a case in which the length of the reference plate 50 in the lateral direction is 14 millimeters, the length of the reference plate bracket 70 in the lateral direction may be 17 millimeters.

A thickness of the reference plate 50 can be defined based on processing conditions in a case in which the reference plate 50 is manufactured. The thickness of the reference plate 50 may be 0.2 millimeters. The reference plate bracket 70 may have a length in a height direction of 5 millimeters. The length of the reference plate bracket 70 in the height direction can be defined based on the viewpoint that the deflection of the reference plate bracket 70 is suppressed and the reference plate bracket 70 does not come into contact with the light guide plate 32 during swing.

For example, in a state in which an upper end of the bent portion 70C is closest to a lower end of the light guide plate 32, in a case in which a distance between the upper end of the bent portion 70C and the lower end of the light guide plate 32 is equal to or longer than 1.5 millimeters, the contact between the upper end of the bent portion 70C and the lower end of the light guide plate 32 can be avoided.

In addition, in a state in which the reference plate 50 shown in Fig. 14 reaches the reading central position, in a case in which the distance between the lower end of the reference plate bracket 70 and the lower end of the light guide plate 32 is equal to or longer than 8 millimeters, the contact between the upper end of the bent portion 70C and the lower end of the light guide plate 32 in a case in which the reference plate bracket 70 swings can be avoided. That is, the distance $L_e$ from the emission surface 35 of the light guide plate 32 to the illumination target area AI can be defined depending on the size of the reference plate bracket 70 that supports the reference plate 50.

It should be noted that the longitudinal direction of the reference plate 50 and the longitudinal direction of the reference plate bracket 70 are the width direction of the printed matter P, and correspond to the width direction of the LED light source 30 and the width direction of the light guide plate 32. The lateral direction of the reference plate 50 and the lateral direction of the reference plate bracket 70 correspond to the transport direction of the printed matter P. The height direction of the reference plate bracket 70 is a direction orthogonal to the longitudinal direction of the reference plate 50 and the lateral direction of the reference plate bracket 70, the direction being orthogonal to the surface on which the reference plate 50 is supported.

The reference plate bracket 70 that supports the reference plate 50 described in the embodiment is an example of a member entering the illumination target area, and is an example of a member disposed in the illumination target area. In addition, "equal to or greater than the size of the reference plate bracket 70" is an example of "equal to or longer than a maximum size of a member".

[Actions and effects]

The reading device 10 according to the embodiment can obtain the following actions and effects.

[1] The light guide plate 32 using the total reflection is disposed between the LED light source 30 and the illumination target area AI of the illumination light. The maximum incidence angle $\theta_{imax}$ of the light guide plate 32 is defined based on the number of reflections C equal to or less than the maximum number of reflections $C_m$ of the light guide plate 32. The distance $L_e$ from the emission surface 35 of the light guide plate 32 to the illumination target area AI is defined to be equal to or less than the index value $L_t$, which is represented by $L_t = \{(1/2) \times (n_1/n_2) \times W\}/\tan\theta_{imax}$, using the total length W of the light guide plate 32 in the thickness direction, the refractive index $n_1$ of the periphery of the light guide plate, the refractive index $n_2$ of the light guide plate, and the maximum incidence angle $\theta_{imax}$ on the light guide plate 32. As a result, the disposition of the light guide plate 32 is defined with high efficiency in a case in which the illumination is relatively bright in a case in which the direct light from the LED light source 30 is used by using the total reflection of the light guide plate 32.

[2] The total length B of the light guide plate 32 in the length direction is defined as $L - (n_1/n_2) \times W/\tan\theta_{imax} \leq B$ by using the distance L from the emission surface of the LED light source 30 to the illumination target area AI, the total length W of the light guide plate 32 in the thickness direction, the refractive index $n_1$ of the periphery of the light guide plate, the refractive index $n_2$ of the light guide plate, the maximum incidence angle $\theta_{imax}$ of the light guide plate 32. As a result, the dimensions of the light guide plate 32 with high efficiency are defined.

[3] The support position 32G of the light guide plate 32 during fixation of the light guide plate 32 is a position of the outer side surface corresponding to the non-reflection position on the reflecting surface 32A of the light guide plate 32. As a result, the support position 32G during fixation of the light guide plate 32 in which the influence of the illumination light on the illuminance distribution in the illumination target area AI is suppressed can be presented.

[4] The power consumption of the LED element 34 is suppressed without increasing the current supplied to the LED element 34. As a result, the heat generation of the LED element 34 is suppressed, and a change in the amount of light emitted by the LED element 34 due to the heat generation of the LED element 34 is reduced.

[5] In the illumination target area AI of the illumination light, a relatively high illuminance can be obtained, and high-speed reading of the image sensor 20 can be realized.

[Application example to illumination device]

It is possible to use the illumination device 14 shown in Fig. 1 as an independent device separated from the reading device 10. As an electric configuration, the illumination device 14 may comprise the system control unit 100, the illumination control unit 104, the information acquisition unit 120, and the memory 122 shown in Fig. 3. The electric configuration of the illumination device 14 is realized by using the computer.

[Application example to light guide plate disposition determination direction]

The procedure of determining the disposition of the light guide plate 32 and the dimensions of the light guide plate 32, which has been described with reference to Figs. 1 to 17, can be understood as a light guide plate disposition determination method. The light guide plate disposition determination method includes a step corresponding to the procedure of determining the disposition of the light guide plate 32 and the dimensions of the light guide plate 32.

[Configuration example of printing system according to embodiment]

[Overall configuration]

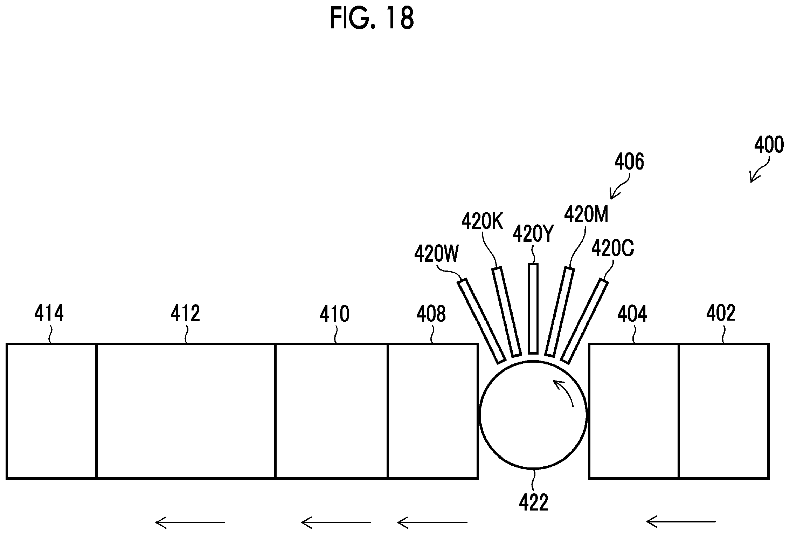

Fig. 18 is an overall configuration view showing a schematic configuration of a printing system according to the embodiment. A printing system 400 is provided with a printing device 406 of a digital type that prints a color image on a substrate by applying single-pass printing. It should be noted that, in Fig. 18, the substrate is not shown. Examples of the substrate include a medium used for the printed matter P shown in Fig. 1.

As the substrate, a paper medium such as single-wafer paper and continuous paper, a sheet-like metal medium, a cloth medium such as a cloth, and the like may be applied. A soft package such as a plastic film may be applied to the substrate. The substrate may be a single layer or a plurality of layers superimposed on each other. The substrate may have a roll-to-roll continuous form or a single-wafer form cut to a defined length. It should be noted that the substrate will be referred to as a medium, media, a sheet, a film, a substrate, or the like in some cases.

The printing system 400 comprises a substrate supply device 402, a first intermediate transport device 404, the printing device 406, a second intermediate transport device 408, a measurement device 410, a drying device 412, and an accumulation device 414. Hereinafter, each of the units will be described in detail.

[Substrate supply device]

In a case in which the substrate has a continuous form, the substrate supply device 402 comprises a roll accommodation portion that accommodates a roll around which the substrate is wound. In a case in which the substrate has a single-wafer form, the substrate supply device 402 comprises a tray in which the substrate is accommodated. The substrate supply device 402 supplies the substrate to the first intermediate transport device 404 in response to printing control of the printing device 406. The substrate supply device 402 may comprise a correction mechanism that corrects a posture of the substrate.

[First intermediate transport device]

The first intermediate transport device 404 delivers the substrate supplied from the substrate supply device 402 to the printing device 406. A known configuration corresponding to the form of the substrate may be applied to the first intermediate transport device 404. It should be noted that an arrow line from the substrate supply device 402 toward the first intermediate transport device 404 indicates a substrate transport direction.

[Printing device]

The printing device 406 comprises an ink jet head 420C, an ink jet head 420M, an ink jet head 420Y, an ink jet head 420K, and an ink jet head 420W.

The ink jet head 420C, the ink jet head 420M, the ink jet head 420Y, the ink jet head 420K, and the ink jet head 420W are disposed in the order described above from an upstream side along the substrate transport direction.

The ink jet head 420C jets cyan ink. The ink jet head 420M jets magenta ink. The ink jet head 420Y jets yellow ink. The ink jet head 420K jets black ink. The ink jet head 420W jets white ink.

A line head in which a plurality of nozzles are disposed in a substrate width direction over a length equal to or longer than the total length of the substrate may be applied to the ink jet head 420C or the like. Examples of the configuration example of the line head include a configuration in which a plurality of head modules are connected to each other. The two-dimensional disposition such as matrix disposition is applied to the plurality of nozzles provided in the ink jet head 420C or the like.

In the ink jet head 420C and the like, a piezoelectric jet method comprising a piezoelectric element as a jetting pressure element that generates a jetting pressure may be applied. For the ink jet head 420C and the like, a thermal method of jetting the ink by using a film boiling phenomenon of the ink may be applied.

The printing device 406 forms the color image on the substrate by using color ink such as cyan ink. The printing device 406 forms a white image, which serves as a background image of the color image, by using white ink.

The printing device 406 comprises a printing drum 422. The printing drum 422 has a cylindrical shape. The printing drum 422 comprises, on a peripheral surface thereof, a substrate support area that supports the substrate. It should be noted that the substrate support area is not shown.

A rotation shaft of the printing drum 422 is connected to a motor (not shown) via a drive mechanism (not shown). In a case in which the motor is rotated, the printing drum 422 rotates in a direction indicated by an arrow line. In a case in which the printing drum 422 is rotated, the substrate supported on the peripheral surface of the printing drum 422 is transported along a rotation direction of the printing drum 422.

A plurality of suction holes are formed in the substrate support area. The plurality of suction holes are disposed based on a defined pattern. The plurality of suction holes communicate with a suction flow channel (not shown). The suction flow channel is connected to a suction pump (not shown). The suction pump is operated to support the substrate by suction on the peripheral surface of the printing drum 422 using the negative pressure generated in the plurality of suction holes.

A transport form of the substrate in the printing device 406 is not limited to the transport form using the printing drum 422. For example, a transport form using a transport belt and a transport form using a plurality of rollers can be applied.

[Second intermediate transport device]

The second intermediate transport device 408 delivers the substrate delivered from the printing drum 422 to the measurement device 410. The same configuration as the configuration of the first intermediate transport device 404 may be applied to the second intermediate transport device 408. It should be noted that an arrow line shown in the second intermediate transport device 408 represents the substrate transport direction of the second intermediate transport device 408.

[Measurement device]

It is possible to apply the reading device 10 shown in Fig. 1 and the like to the measurement device 410. The measurement device 410 can read a test pattern printed on the substrate and detect the jet abnormality of the ink jet head 420C or the like based on the read data of the test pattern.

The measurement device 410 can read the print image printed on the substrate and detect the defect in the print image based on the read data of the print image.

A measurement device 410 provided in the printing system 400 realizes a relatively high illuminance in the illumination target area AI and enables high-speed reading of the reading target. As a result, in a case in which high-speed printing is performed, high-speed reading of the print image of the printed matter, the test pattern, or the like is performed, image processing is performed on the read data, and the jet abnormality detection of the ink jet head 420C or the like, the defect detection in the print image, and the density unevenness correction can be performed.

[Drying device]

The drying device 412 performs drying processing on the printed substrate. The drying device 412 comprises a heater and a fan, and may adopt a configuration in which hot air is blown onto the printed substrate. The drying device 412 comprises a drying transport unit that transports the printed substrate. As a transport form of the printed substrate, a known transport form such as drum transport, belt transport, and roller transport may be applied. It should be noted that an arrow line shown in the drying device 412 indicates the substrate transport direction in the drying device 412.

[Accumulation device]

The accumulation device 414 accommodates the substrate delivered from the drying device 412. In a case in which the substrate has a continuous form, the accumulation device 414 comprises a roll accommodation portion that accommodates a roll around which the substrate is wound. In a case in which the substrate has a single-wafer form, the accumulation device 414 comprises a tray in which the substrate is accommodated.

[Electric configuration of ink jet printing system]

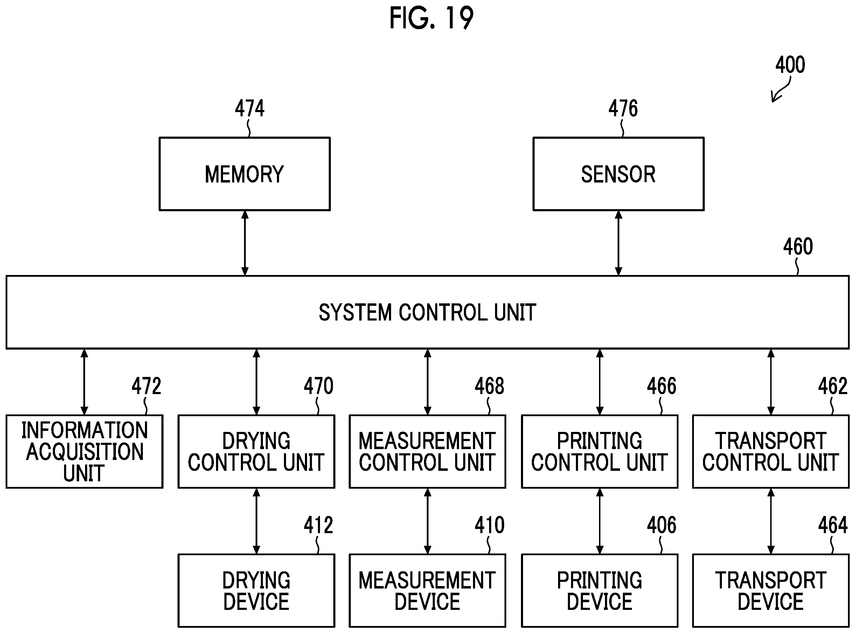

Fig. 19 is a functional block diagram showing an electric configuration of the printing system shown in Fig. 18. The printing system 400 comprises a system control unit 460, a transport control unit 462, a printing control unit 466, a measurement control unit 468, a drying control unit 470, and an information acquisition unit 472.

The system control unit 460 comprehensively controls an overall operation of the printing system 400. The system control unit 460 transmits command signals to various control units. The system control unit 460 functions as a memory controller that controls the storage of data in a memory 474 and the read of data from the memory 474.

The system control unit 460 acquires a sensor signal transmitted from a sensor 476 and transmits the command signals based on the sensor signal to various control units. The sensor 476 includes a position detection sensor, a temperature sensor, and the like provided in each unit of the printing system 400.

The transport control unit 462 sets a transport condition based on the command signal transmitted from the system control unit 460, and controls an operation of a transport device 464 based on the set transport condition. The transport device 464 shown in Fig. 19 includes the drying transport device provided in the first intermediate transport device 404, the printing drum 422, and the drying device 412 shown in Fig. 18. The transport device 464 includes the transport device 16 shown in Fig. 1. The transport device 464 may include the substrate supply device 402 and the accumulation device 414.

The printing control unit 466 sets a printing condition based on the command signal transmitted from the system control unit 460 and controls an operation of the printing device 406 based on the set printing condition. That is, the printing control unit 466 comprises an image processing unit that executes color separation processing, color conversion processing, correction processing of each processing, and halftone processing on the print data to generate halftone data for each color.

The printing control unit 466 comprises a drive voltage generation unit that generates a drive voltage supplied to the ink jet head 420C or the like based on the halftone data of each color. The printing control unit 466 comprises a drive voltage output unit that supplies the drive voltage to the ink jet head 420C.

The printing control unit 466 performs the correction of the printing device 406 based on the measurement data obtained using the measurement device 410. The printing system 400 may further comprise a correction processing unit that performs the correction of the printing device 406 based on the measurement data obtained using the measurement device 410, separately from the printing control unit 466.

The measurement control unit 468 sets a measurement condition based on the command signal transmitted from the system control unit 460, and controls an operation of the measurement device 410 based on the set measurement condition. The measurement control unit 468 shown in Fig. 19 can have the function of the reading device 10 shown in Fig. 1.

The drying control unit 470 sets a processing condition of main drying processing based on the command signal transmitted from the system control unit 460, and controls an operation of the drying device 412 based on the set processing condition.

The information acquisition unit 472 acquires various information applied to the control of the printing system 400. The system control unit 460 transmits the command signals to various control units based on the various information acquired using the information acquisition unit 472.

The memory 474 can store various data, parameters, and programs applied to the printing system 400. The memory 474 can function as the memory 122 shown in Fig. 3.

[Hardware configuration example of control device applied to printing system]

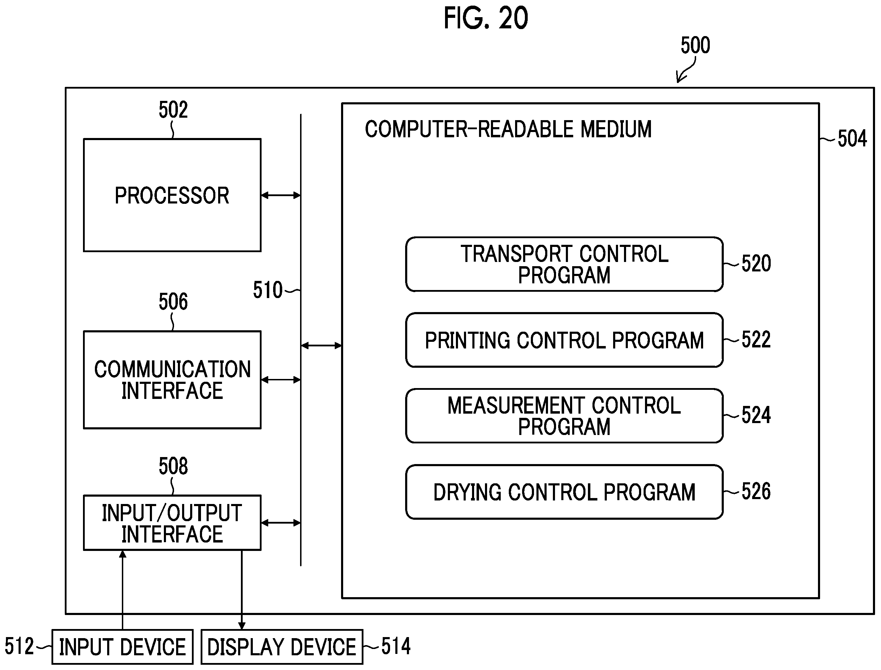

Fig. 20 is a block diagram showing a hardware configuration example of a control device applied to the printing system shown in Fig. 18. A control device 500 provided in the printing system 400 comprises a processor 502, a computer-readable medium 504 that is a non-transitory tangible object, a communication interface 506, and an input/output interface 508.

A computer is applied as the control device 500. A form of the computer may be a server, a personal computer, a workstation, a tablet terminal, and the like.

The processor 502 includes a central processing unit (CPU). The processor 502 may include a graphics processing unit (GPU). The processor 502 is connected to the computer-readable medium 504, the communication interface 506, and the input/output interface 508 via a bus 510. An input device 512 and a display device 514 are connected to the bus 510 via the input/output interface 508.

The processor 502 can function as a first processor which executes processing related to generation of gradation correction data, a second processor which executes processing related to image formation, and a third processor which executes processing related to measurement.

The computer-readable medium 504 includes a memory as a main storage device, and a storage as an auxiliary storage device. A semiconductor memory, a hard disk apparatus, a solid state drive apparatus, and the like may be applied to the computer-readable medium 504. Any combination of a plurality of apparatuses may be applied to the computer-readable medium 504.

It should be noted that the hard disk apparatus can be referred to as HDD that is an abbreviation for hard disk drive in English. The solid state drive apparatus can be referred to as SSD that is an abbreviation for solid state drive in English notation.

The control device 500 is connected to a network via the communication interface 506, and is communicably connected to an external device. A local area network (LAN) and the like may be applied to the network. It should be noted that the network is not shown.

The computer-readable medium 504 stores a transport control program 520, a printing control program 522, a measurement control program 524, and a drying control program 526.

The transport control program 520 corresponds to transport control applied to the transport device 464 shown in Fig. 19. The printing control program 522 corresponds to printing control applied to the printing device 406. The measurement control program 524 corresponds to measurement control applied to the measurement device 410. The drying control program 526 corresponds to drying control applied to the drying device 412.

Various programs stored in the computer-readable medium 504 include one or more commands. Various data, various parameters, and the like are stored in the computer-readable medium 504. It should be noted that the memory 474 shown in Fig. 19 is included in the computer-readable medium 504 shown in Fig. 20.

In the printing system 400, the processor 502 performs various programs stored in the computer-readable medium 504 to realize various functions in the printing system 400. It should be noted that the term "program" is synonymous with the term "software".

The control device 500 communicates data to and from an external device via the communication interface 506. Various standards, such as universal serial bus (USB), may be applied to the communication interface 506. Either wired communication or wireless communication may be applied to a communication form of the communication interface 506.

The control device 500 is connected to the input device 512 and the display device 514 via the input/output interface 508. An input device, such as a keyboard and a mouse, is applied to the input device 512. The display device 514 displays various information applied to the control device 500.

A liquid crystal display, an organic EL display, a projector, or the like may be applied to the display device 514. Any combination of a plurality of devices may be applied to the display device 514. It should be noted that EL of the organic EL display is an abbreviation for electro-luminescence.

Here, examples of the hardware structure of the processor 502 include a CPU, a GPU, a programmable logic device (PLD), and an application specific integrated circuit (ASIC). The CPU is a general-purpose processor that performs the program and acts as various functional units. The GPU is a processor specialized in the image processing.

The PLD is a processor in which a configuration of an electric circuit can be changed after manufacturing the device. Examples of the PLD include a field programmable gate array (FPGA). The ASIC is a processor comprising a dedicated electric circuit specifically designed to execute specific processing.

One processing unit may be configured by one of these various processors or may be configured by two or more processors of the same type or different types. Examples of a combination of the various processors include a combination of one or more FPGAs and one or more CPUs, and a combination of one or more FPGAs and one or more GPUs. As another example of the combination of the various processors, there is a combination of one or more CPUs and one or more GPUs.

A plurality of functional units may be configured by using one processor. As an example in which the plurality of functional units are configured by using one processor, there is an aspect in which one processor is configured by applying a combination of one or more CPUs and software, such as system on a chip (SoC) represented by the computer, such as a client or a server, and this processor is made to act as the plurality of functional units.

As another example in which the plurality of functional units are configured by using one processor, there is an aspect in which a processor that implements the functions of the entire system including the plurality of functional units by using one IC chip is used. It should be noted that IC is an abbreviation for an integrated circuit.

As described above, various functional units are configured by using one or more of the various processors described above as the hardware structure. Further, the hardware structure of these various processors is, more specifically, an electric circuit (circuitry) in which circuit elements, such as semiconductor elements, are combined.

The computer-readable medium 504 may include a semiconductor element, such as a read only memory (ROM) or a random access memory (RAM). The computer-readable medium 504 can include a magnetic storage medium, such as a hard disk. The computer-readable medium 504 can include a plurality of types of storage media.

Explanation of References

10: reading device
12: image reception device
14: illumination device
14A: illumination device
14B: illumination device

16: transport device
18: housing
20: image sensor
22: image-forming lens
30: LED light source
32: light guide plate
32A: reflecting surface
32B: reflection position
32C: outer side surface
32D: reflection corresponding position
32E: light guide plate
32F: light guide plate
32G: support position
32H: support position
32I: support position
33: first surface
34: LED element
35: emission surface
36: LED substrate
37: diffusion plate
40: upstream transport roller
42: background roller
44: downstream transport roller
50: reference plate
52: reference plate moving device
54: moving mechanism
56: motor
60: guide groove bracket 62: drive arm
64: drive force transmission shaft
66: first guide groove
68: first guide pin
70: reference plate bracket
70A: reference plate fixing portion
70B: guide pin attachment portion
70C: bent portion
72: second guide groove
74: second guide pin
100: system control unit
102: transport control unit
104: illumination control unit
106: reading control unit
108: reference plate movement control unit
120: information acquisition unit
122: memory
320: light guide plate
322: first surface
324: emission surface
326: first reflecting surface
328: second reflecting surface
330: third reflecting surface
332: fourth reflecting surface
400: printing system
402: substrate supply device
404: first intermediate transport device
406: printing device
408: second intermediate transport device
410: measurement device
412: drying device

414: accumulation device
420C: ink jet head
420K: ink jet head
420M: ink jet head
420W: ink jet head
420Y: ink jet head
422: printing drum
460: system control unit
462: transport control unit
464: transport device
468: measurement control unit
470: drying control unit
472: information acquisition unit
474: memory
476: sensor
500: control device
502: processor
504: computer-readable medium
506: communication interface
508: input/output interface
510: bus
512: input device
514: display device
520: transport control program
522: printing control program
524: measurement control program
526: drying control program
$\theta$: incidence angle with respect to reflecting surface
$\theta_i$: incidence angle with respect to first surface
$\theta_{imax}$: maximum incidence angle
B: total length of light guide plate in length direction
L: shortest distance from emission surface of LED light source to illumination target area
$L_e$: shortest distance from emission surface of light guide plate to illumination target area
$L_t$: index value
P: printed matter
$R_a$: light
$R_b$: light
$R_c$: light
$R_d$: light
TL: reading line
W: total length of light guide plate in thickness direction
$n_1$: refractive index of periphery of light guide plate
$n_2$: refractive index of light guide plate

**Claims**

1.  An illumination device (14) comprising:

    a light source (30) that emits light for illuminating an illumination target area (AI); and
    a light guide plate (32) including a first surface (33) on which the light emitted from the light source is incident, a reflecting surface (32A) that reflects the light incident from the first surface one or more times and has an orientation intersecting the first surface, and an emission surface (35) that faces the first surface and has an orientation intersecting the reflecting surface,
    wherein, in the light guide plate, a direction from the first surface toward the emission surface is defined as a length direction, and a direction of a relatively short side among two directions orthogonal to the length direction is defined as a thickness direction, and **characterized in that**
    in a case in which a total length of the light guide plate in the thickness direction is denoted by W, a refractive index of a periphery of the light guide plate is denoted by $n_1$, a refractive index of the light guide plate is denoted by $n_2$, and a maximum incidence angle with respect to the first surface corresponding to the number of reflections equal to or less than a maximum number of reflections defined from a condition in which the light incident on the light guide plate is totally reflected is denoted by $\theta_{imax}$, the light guide plate is disposed at a position at which a distance from the emission surface to the illumination target area is equal to or shorter than Lt, which is calculated by $Lt = \{(1/2) \times (n_1/n_2) \times W\}/\tan\theta_{imax}$.

2. The illumination device according to claim 1,
   wherein the light guide plate is disposed at a position at which the distance from the emission surface to the illumination target area is equal to or longer than a maximum size of a member entering the illumination target area or is equal to or longer than a maximum size of a member disposed in the illumination target area.

3. The illumination device according to claim 1 or 2,
   wherein, in a case in which a total length of the light guide plate in the length direction is denoted by B, the distance from the emission surface of the light source to the illumination target area is denoted by L, and the number of reflections is denoted by C, the maximum incidence angle $\theta_{imax}$ is represented by $\theta_{imax} = \arctan[\{B + (L - B) \times (n_2/n_1)\}/(C \times W)]$.

4. The illumination device according to claim 3,

   wherein, in a case in which a critical angle of the reflecting surface is denoted by $\theta_t$, the maximum number of reflections $C_m$ is represented by $C_m = INT[\{B + (L - B) \times (n_2/n_1)\}/(W \times \tan\theta_t)]$, and
   an integer that is equal to or greater than 1 and equal to or less than the maximum number of reflections $C_m$ is defined for the number of reflections C, and
   preferably, in a case in which an incidence angle with respect to the first surface of the light guide plate is denoted by $\theta_i$, an incidence angle $\theta°$ on the reflecting surface is represented by $\theta° = 90° - \arcsin\{(n_1/n_2) \times \sin\theta_i\}$.

5. The illumination device according to claim 4,
   wherein the critical angle $\theta_t$ of the reflecting surface is defined as $\theta_t = \arcsin(n_1/n_2)$.

6. The illumination device according to any one of claims 1 to 5,
   wherein, during fixation of the light guide plate, a non-reflection position different from a reflection position of the light on the reflecting surface is supported.

7. The illumination device according to claim 6,
   wherein, in a case in which the number of reflections is one, during fixation of the light guide plate, a position between the reflection position and the emission surface of the light guide plate is supported.

8. The illumination device according to claim 6,
   wherein, in a case in which the number of reflections is two or more, during fixation of the light guide plate, the non-reflection position at which a distance between adjacent reflection positions is longest is supported.

9. The illumination device according to claim 6 or 8,
   wherein, in a case in which the number of reflections is two or more, during fixation of the light guide plate, in a case in which a distance between the reflection position closest to the emission surface of the light guide plate and the emission surface of the light guide plate is longer than a distance between adjacent reflection positions, the non-reflection position between the reflection position closest to the emission surface of the light guide plate and the emission surface of the light guide plate is supported.

10. The illumination device according to claim 6, 8 or 9,
    wherein, in a case in which the number of reflections is two or more, during fixation of the light guide plate, a position having a low density of light is supported.

11. The illumination device according to any one of claims 1 to 10,

    wherein the emission surface of the light guide plate has diffusivity of the light emitted from the emission surface of the light guide plate,
    or,
    wherein the emission surface of the light guide plate is a smooth surface, and

a diffusion member that diffuses the light emitted from the emission surface of the light guide plate is disposed between the emission surface of the light guide plate and the illumination target area.

12. A light guide plate disposition determination method in an illumination device (14) including

a light source (30) that emits light for illuminating an illumination target area (AI); and
a light guide plate (32) including a first surface (33) on which the light emitted from the light source is incident, a reflecting surface (32A) that reflects the light incident from the first surface one or more times and has an orientation intersecting the first surface, and an emission surface (35) that faces the first surface and has an orientation intersecting the reflecting surface,
in which, in the light guide plate, a direction from the first surface toward the emission surface is defined as a length direction, and a direction of a relatively short side among two directions orthogonal to the length direction is defined as a thickness direction, the light guide plate disposition determination method being **characterized in** comprising:
determining, in a case in which a total length of the light guide plate in the thickness direction is denoted by W, a refractive index of a periphery of the light guide plate is denoted by $n_1$, a refractive index of the light guide plate is denoted by $n_2$, and a maximum incidence angle with respect to the first surface corresponding to the number of reflections equal to or less than a maximum number of reflections defined from a condition in which the light incident on the light guide plate is totally reflected is denoted by $\theta_{imax}$, disposition of the light guide plate at a position at which a distance from the emission surface to the illumination target area is equal to or shorter than $L_t$, which is calculated by $L_t = \{(1/2) \times (n_1/n_2) \times W\}/\tan\theta_{imax}$.

13. A printing system (400) comprising:

a printing device (406); and
a reading device (10) that reads a printed matter generated by using the printing device,
wherein the reading device includes
the illumination device (14) according to any one of claims 1 to 11.

14. The printing system according to claim 13, further comprising:

a reference member as a reference in a case of setting a reading condition of the reading device;
a support member that supports the reference member; and
a reference member moving device that moves the reference member between a reading position at which the reference member is read by using the reading device and that is included in the illumination target area, and a retreat position at which the reference member retreats from the reading position,
wherein the light guide plate is disposed at a position at which the distance from the emission surface to the illumination target area is equal to or longer than a maximum size of the support member.

15. The printing system according to claim 13 or 14,

wherein the reading device includes

an image sensor that reads the printed matter, and
an image-forming lens that forms an optical image of the printed matter on the image sensor, and

the emission surface has unevenness that diffuses the light emitted from the emission surface in an area corresponding to a numerical aperture of the image-forming lens.

**Patentansprüche**

1. Beleuchtungsvorrichtung (14), umfassend:

eine Lichtquelle (30), die Licht zum Beleuchten eines Beleuchtungszielbereichs (AI) emittiert; und
eine Lichtleitplatte (32), die eine erste Fläche (33), auf der das von der Lichtquelle emittierte Licht einfällt, eine reflektierende Fläche (32A), die das von der ersten Fläche einfallende Licht einmal oder mehrmals reflektiert und eine Ausrichtung, die die erste Fläche schneidet, aufweist, und eine Emissionsfläche (35), die der ersten Fläche zugewandt ist und eine Ausrichtung, die die reflektierende Fläche schneidet, aufweist, enthält,
wobei bei der Lichtleitplatte eine Richtung von der ersten Fläche zu der Emissionsfläche hin als eine Längsrichtung definiert ist und eine Richtung einer relativ kurzen Seite unter zwei Richtungen senkrecht zu der Längsrichtung als eine Dickenrichtung definiert ist, und **dadurch gekennzeichnet, dass**
in einem Fall, in dem eine Gesamtlänge der Lichtleitplatte in der Dickenrichtung als W bezeichnet wird, ein Brechungsindex eines Umfangs der Lichtleitplatte als $n_1$ bezeichnet wird, ein Brechungsindex der Lichtleitplatte als $n_2$ bezeichnet wird und ein maximaler Einfallswinkel in Bezug auf die erste Fläche, der der Anzahl an Reflexionen entspricht, die gleich oder kleiner als eine maximale Anzahl an Reflexionen ist, die aus einer Bedingung, bei der das auf die Lichtleitplatte einfallende Licht total reflektiert wird, als $\theta_{imax}$ bezeichnet wird, definiert ist, die Lichtleitplatte an einer Position angeordnet ist, an der ein Abstand von der Emissionsfläche zu dem Beleuchtungszielbereich gleich oder kürzer als $L_t$ ist, der durch $L_t = \{(1/2) \times (n_1/n_2) \times W\}/\tan\theta_{imax}$ berechnet wird.

2. Beleuchtungsvorrichtung nach Anspruch 1,
wobei die Lichtleitplatte an einer Position angeordnet ist, an der der Abstand von der Emissionsfläche zu dem Beleuchtungszielbereich gleich oder länger als eine maximale Größe eines Elements, das in den Beleuchtungszielbereich eintritt, ist oder gleich oder länger als eine maximale Größe eines Elements, das in dem Beleuchtungszielbereich angeordnet ist, ist.

3. Beleuchtungsvorrichtung nach Anspruch 1 oder 2,
wobei in einem Fall, in dem eine Gesamtlänge der Lichtleitplatte in der Längsrichtung als B bezeichnet wird, der Abstand von der Emissionsfläche der Lichtquelle zu dem Beleuchtungszielbereich als L bezeichnet wird und die Anzahl an Reflexionen als C bezeichnet wird, der maximale Einfallswinkel $\theta_{imax}$ durch $\theta_{imax} = \arctan[\{B + (L - B) \times (n_2/n_1)\}/(C \times W)]$ dargestellt wird.

4. Beleuchtungsvorrichtung nach Anspruch 3,

wobei in einem Fall, in dem ein kritischer Winkel der reflektierenden Fläche als $\theta_t$ bezeichnet wird, die maximale Anzahl an Reflexionen $C_m$ durch $C_m = INT[\{B + (L - B) \times (n_2/n_1)\}/(W \times \tan\theta_t)]$ dargestellt wird, und
eine ganze Zahl, die gleich oder größer als 1 und gleich oder kleiner als die maximale Anzahl an Reflexionen $C_m$ ist, für die Anzahl an Reflexionen C definiert ist, und
in einem Fall, in dem ein Einfallswinkel in Bezug auf die erste Fläche der Lichtleitplatte als $\theta_i$ bezeichnet wird, ein Einfallswinkel $\theta°$ auf der reflektierenden Fläche durch $\theta° = 90° - \arcsin\{(n_1/n_2) \times \sin\theta_i\}$ dargestellt wird.

5. Beleuchtungsvorrichtung nach Anspruch 4,
wobei der kritische Winkel $\theta_t$ der reflektierenden Fläche als $\theta_t = \arcsin(n_1/n_2)$ definiert ist.

6. Beleuchtungsvorrichtung nach einem der Ansprüche 1 bis 5,
wobei während Fixierung der Lichtleitplatte eine Nichtreflexionsposition, die sich von einer Reflexionsposition des Lichts auf der reflektierenden Fläche unterscheidet, getragen wird.

7. Beleuchtungsvorrichtung nach Anspruch 6,
wobei in einem Fall, in dem die Anzahl an Reflexionen eins ist, während Fixierung der Lichtleitplatte, eine Position zwischen der Reflexionsposition und der Emissionsfläche der Lichtleitplatte getragen wird.

8. Beleuchtungsvorrichtung nach Anspruch 6,
wobei in einem Fall, in dem die Anzahl an Reflexionen zwei oder mehr beträgt, während Fixierung der Lichtleitplatte, die Nichtreflexionsposition, an der ein Abstand zwischen benachbarten Reflexionspositionen am längsten ist, getragen wird.

9. Beleuchtungsvorrichtung nach Anspruch 6 oder 8,
wobei in einem Fall, in dem die Anzahl an Reflexionen zwei oder mehr beträgt, während Fixierung der Lichtleitplatte, in einem Fall, in dem ein Abstand zwischen der Reflexionsposition, die der Emissionsfläche der Lichtleitplatte am nächsten liegt, und der Emissionsfläche der Lichtleitplatte länger als ein Abstand zwischen benachbarten Reflexionspositionen ist, die Nichtreflexionsposition zwischen der Reflexionsposition, die der Emissionsfläche der Lichtleitplatte am nächsten liegt, und der Emissionsfläche der Lichtleitplatte getragen wird.

10. Beleuchtungsvorrichtung nach Anspruch 6, 8 oder 9,

wobei in einem Fall, in dem die Anzahl an Reflexionen zwei oder mehr beträgt, während Fixierung der Lichtleitplatte, eine Position, die eine geringe Dichte von Licht aufweist, getragen wird.

11. Beleuchtungsvorrichtung nach einem der Ansprüche 1 bis 10,

   wobei die Emissionsfläche der Lichtleitplatte Diffusivität des von der Emissionsfläche der Lichtleitplatte emittierten Lichts aufweist,
   oder,
   wobei die Emissionsfläche der Lichtleitplatte eine glatte Fläche ist, und
   ein Diffusionselement, das das von der Emissionsfläche der Lichtleitplatte emittierte Licht diffundiert, zwischen der Emissionsfläche der Lichtleitplatte und dem Beleuchtungszielbereich angeordnet ist.

12. Lichtleitplatten-Anordnungsbestimmungsverfahren bei einer Beleuchtungsvorrichtung (14), die enthält:

   eine Lichtquelle (30), die Licht zum Beleuchten eines Beleuchtungszielbereichs (AI) emittiert; und
   eine Lichtleitplatte (32), die eine erste Fläche (33), auf der das von der Lichtquelle emittierte Licht einfällt, eine reflektierende Fläche (32A), die das von der ersten Fläche einfallende Licht einmal oder mehrmals reflektiert und eine Ausrichtung, die die erste Fläche schneidet, aufweist, und eine Emissionsfläche (35), die der ersten Fläche zugewandt ist und eine Ausrichtung, die die reflektierende Fläche schneidet, aufweist, enthält,
   wobei bei der Lichtleitplatte eine Richtung von der ersten Fläche zu der Emissionsfläche hin als eine Längsrichtung definiert ist und eine Richtung einer relativ kurzen Seite unter zwei Richtungen senkrecht zu der Längsrichtung als eine Dickenrichtung definiert ist, wobei die Lichtleitplatten-Anordnungsbestimmungsverfahren **dadurch gekennzeichnet ist, dass** es umfasst:
   Bestimmen, in einem Fall, in dem eine Gesamtlänge der Lichtleitplatte in der Dickenrichtung als W bezeichnet wird, ein Brechungsindex eines Umfangs der Lichtleitplatte als $n_1$ bezeichnet wird, ein Brechungsindex der Lichtleitplatte als $n_2$ bezeichnet wird und ein maximaler Einfallswinkel in Bezug auf die erste Fläche, der der Anzahl an Reflexionen entspricht, die gleich oder kleiner als eine maximale Anzahl an Reflexionen ist, die aus einer Bedingung, bei der das auf die Lichtleitplatte einfallende Licht total reflektiert wird, als $\theta_{imax}$ bezeichnet wird, definiert ist, von Anordnung der Lichtleitplatte an einer Position, an der ein Abstand von der Emissionsfläche zu dem Beleuchtungszielbereich gleich oder kürzer als $L_t$ ist, der durch $L_t = \{(1/2) \times (n_1/n_2) \times W\}/\tan\theta_{imax}$ berechnet wird.

13. Drucksystem (400), umfassend:

   eine Druckvorrichtung (406); und
   eine Lesevorrichtung (10), die ein gedrucktes Material, das durch Verwenden der Druckvorrichtung erzeugt wird, liest,
   wobei die Lesevorrichtung die Beleuchtungsvorrichtung (14) nach einem der Ansprüche 1 bis 11 enthält.

14. Drucksystem nach Anspruch 13, ferner umfassend:

   ein Referenzelement als eine Referenz in einem Fall des Einstellens einer Lesebedingung der Lesevorrichtung;
   ein Trägerelement, das das Referenzelement trägt; und
   eine Referenzelement-Bewegungsvorrichtung, die das Referenzelement zwischen einer Leseposition, an der das Referenzelement durch Verwenden der Lesevorrichtung gelesen wird, und die in dem Beleuchtungszielbereich enthalten ist, und einer Rückwärtsbewegungsposition, an der sich das Referenzelement von der Leseposition rückwärts bewegt, bewegt,
   wobei die Lichtleitplatte an einer Position angeordnet ist, an der der Abstand von der Emissionsfläche zu dem Beleuchtungszielbereich gleich oder länger als eine maximale Größe des Trägerelements ist.

15. Drucksystem nach Anspruch 13 oder 14,
   wobei die Lesevorrichtung enthält:

   einen Bildsensor, der das gedruckte Material liest, und
   eine Bilderzeugungslinse, die ein optisches Bild des gedruckten Materials auf dem Bildsensor bildet, und
   die Emissionsfläche Ungleichmäßigkeiten aufweist, die das von der Emissionsfläche emittierte Licht in einem Bereich, der einer numerischen Apertur der Bilderzeugungslinse entspricht, diffundieren.

**Revendications**

1. Dispositif d'éclairage (14) comprenant :

   une source de lumière (30) qui émet de la lumière pour éclairer une zone cible d'éclairage (AI) ; et
   une plaque de guidage de lumière (32) incluant une première surface (33) sur laquelle de la lumière émise à partir de la source de lumière est incidente, une surface de réflexion (32A) qui réfléchit de la lumière incidente de la première surface une ou plusieurs fois et a une orientation croisant la première surface, et une surface d'émission (35) qui fait face à la première surface et a une orientation croisant la surface de réflexion,
   dans lequel, dans la plaque de guidage de lumière, une direction de la première surface vers la surface d'émission est définie comme une direction de longueur, et une direction d'un côté relativement court parmi deux directions orthogonales à la direction de longueur est définie comme une direction d'épaisseur, et **caractérisé en ce que** dans un cas où une longueur totale de la plaque de guidage de lumière dans la direction d'épaisseur est désignée par W, un indice de réfraction d'une périphérie de la plaque de guidage de lumière est désigné par $n_1$, un indice de réfraction de la plaque de guidage de lumière est désigné par $n_2$, et un angle d'incidence maximal par rapport à la première surface correspondant au nombre de réflexions égal ou inférieur à un nombre maximal de réflexions défini à partir d'une condition dans laquelle la lumière incidente sur la plaque de guidage de lumière est totalement réfléchie est désigné par $\theta_{imax}$, la plaque de guidage de lumière est disposée à une position à laquelle une distance de la surface d'émission à la zone cible d'éclairage est égale ou inférieure à $L_t$, qui est calculée par $L_t = \{(1/2) \times (n_1/n_2) \times W\}/\tan\theta_{imax}$.

2. Dispositif d'éclairage selon la revendication 1,
   dans lequel la plaque de guidage de lumière est disposée à une position à laquelle la distance de la surface d'émission à la zone cible d'éclairage est égale ou supérieure à une taille maximale d'un élément entrant dans la zone cible d'éclairage ou est égale ou supérieure à une taille maximale d'un élément disposé dans la zone cible d'éclairage.

3. Dispositif d'éclairage selon la revendication 1 ou la revendication 2,
   dans lequel, dans un cas où une longueur totale de la plaque de guidage de lumière dans la direction de longueur est désignée par B, la distance de la surface d'émission de la source de lumière à la zone cible d'éclairage est désignée par L, et le nombre de réflexions est désigné par C, l'angle d'incidence maximal $\theta_{imax}$ est représenté par $\theta_{imax}$ = arctan $[\{B + (L - B) \times (n_2/n_1)\}/(C \times W)]$.

4. Dispositif d'éclairage selon la revendication 3,

   dans lequel, dans un cas où un angle critique de la surface de réflexion est désigné par $\theta_t$, le nombre maximal de réflexions $C_m$ est représenté par $C_m$ = INT$[\{B + (L - B) \times (n_2/n_1)\}/(W \times \tan\theta_t)]$, et
   un entier qui est égal ou supérieur à 1 et égal ou inférieur au nombre maximal de réflexions $C_m$ est défini pour le nombre de réflexions C, et
   de préférence, dans un cas où un angle d'incidence par rapport à la première surface de la plaque de guidage de lumière est désigné par $\theta_i$, un angle d'incidence $\theta°$ sur la surface de réflexion est représenté par $\theta°$ = 90° - arcsin $\{(n_1/n_2) \times \sin\theta_i\}$.

5. Dispositif d'éclairage selon la revendication 4,
   dans lequel l'angle critique $\theta_t$ de la surface de réflexion est défini comme $\theta_t$ = arcsin$(n_1/n_2)$.

6. Dispositif d'éclairage selon l'une quelconque des revendications 1 à 5,
   dans lequel, pendant la fixation de la plaque de guidage de lumière, une position de non-réflexion différente d'une position de réflexion de la lumière sur la surface de réflexion est soutenue.

7. Dispositif d'éclairage selon la revendication 6,
   dans lequel, dans un cas où le nombre de réflexions est un, pendant la fixation de la plaque de guidage de lumière, une position entre la position de réflexion et la surface d'émission de la plaque de guidage de lumière est soutenue.

8. Dispositif d'éclairage selon la revendication 6,
   dans lequel, dans un cas où le nombre de réflexions est deux ou plus, pendant la fixation de la plaque de guidage de lumière, la position de non-réflexion à laquelle une distance entre des positions de réflexion adjacentes est la plus longue est soutenue.

9. Dispositif d'éclairage selon la revendication 6 ou la revendication 8,
dans lequel, dans un cas où le nombre de réflexions est deux ou plus, pendant la fixation de la plaque de guidage de lumière, dans un cas où une distance entre la position de réflexion la plus proche de la surface d'émission de la plaque de guidage de lumière et la surface d'émission de la plaque de guidage de lumière est plus longue qu'une distance entre des positions de réflexion adjacentes, la position de non-réflexion entre la position de réflexion la plus proche de la surface d'émission de la plaque de guidage de lumière et la surface d'émission de la plaque de guidage de lumière est soutenue.

10. Dispositif d'éclairage selon la revendication 6, 8 ou la revendication 9,
dans lequel, dans un cas où le nombre de réflexions est deux ou plus, pendant la fixation de la plaque de guidage de lumière, une position ayant une faible densité de lumière est soutenue.

11. Dispositif d'éclairage selon l'une quelconque des revendications 1 à 10,

dans lequel la surface d'émission de la plaque de guidage de lumière a une diffusivité de la lumière émise de la surface d'émission de la plaque de guidage de lumière,
ou,
dans lequel la surface d'émission de la plaque de guidage de lumière est une surface lisse, et
un élément de diffusion qui diffuse de la lumière émise de la surface d'émission de la plaque de guidage de lumière est disposé entre la surface d'émission de la plaque de guidage de lumière et la zone cible d'éclairage.

12. Procédé de détermination de disposition d'une plaque de guidage de lumière dans un dispositif d'éclairage (14) incluant :

une source de lumière (30) qui émet de la lumière pour éclairer une zone cible d'éclairage (AI) ; et
une plaque de guidage de lumière (32) incluant une première surface (33) sur laquelle de la lumière émise à partir de la source de lumière est incidente, une surface de réflexion (32A) qui réfléchit de la lumière incidente de la première surface une ou plusieurs fois et a une orientation croisant la première surface, et une surface d'émission (35) qui fait face à la première surface et a une orientation croisant la surface de réflexion,
dans lequel, dans la plaque de guidage de lumière, une direction de la première surface vers la surface d'émission est définie comme une direction de longueur, et une direction d'un côté relativement court parmi deux directions orthogonales à la direction de longueur est définie comme une direction d'épaisseur, le procédé de détermination de disposition de plaque de guidage de lumière étant **caractérisé en ce qu'**il comprend :
dans un cas où une longueur totale de la plaque de guidage de lumière dans la direction d'épaisseur est désignée par W, un indice de réfraction d'une périphérie de la plaque de guidage de lumière est désigné par $n_1$, un indice de réfraction de la plaque de guidage de lumière est désigné par $n_2$, et un angle d'incidence maximal par rapport à la première surface correspondant au nombre de réflexions égal ou inférieur à un nombre maximal de réflexions défini à partir d'une condition dans laquelle la lumière incidente sur la plaque de guidage de lumière est totalement réfléchie est désigné par $\theta_{imax}$, déterminer la disposition de la plaque de guidage de lumière à une position à laquelle une distance de la surface d'émission à la zone cible d'éclairage est égale ou inférieure à $L_t$, qui est calculée par $Lt = \{(1/2) \times (n_1/n_2) \times W\}/\tan\theta_{imax}$.

13. Système d'impression (400) comprenant :

un dispositif d'impression (406) ; et
un dispositif de lecture (10) qui lit une matière imprimée générée en utilisant le dispositif d'impression,
dans lequel le dispositif de lecture inclut le dispositif d'éclairage (14) selon l'une quelconque des revendications 1 à 11.

14. Système d'impression selon la revendication 13, comprenant en outre :

un élément de référence en tant qu'une référence dans un cas de réglage d'une condition de lecture du dispositif de lecture ;
un élément de support qui supporte l'élément de référence ; et
un dispositif de déplacement d'élément de référence qui déplace l'élément de référence entre une position de lecture à laquelle l'élément de référence est lu en utilisant le dispositif de lecture et qui est inclus dans la zone cible d'éclairage, et une position de retrait à laquelle l'élément de référence se retire de la position de lecture,
dans lequel la plaque de guidage de lumière est disposée à une position à laquelle la distance de la surface d'émission à la zone cible d'éclairage est égale ou supérieure à une taille maximale de l'élément de support.

15. Système d'impression selon la revendication 13 ou la revendication 14,
dans lequel le dispositif de lecture inclut :

un capteur d'images qui lit la matière imprimée, et
une lentille de formation d'images qui forme une image optique de la matière imprimée sur le capteur d'images, et
la surface d'émission a une irrégularité qui diffuse de la lumière émise de la surface d'émission dans une zone
correspondant à une ouverture numérique de la lentille de formation d'images.

FIG. 1

# FIG. 2

# FIG. 3

# FIG. 4

# FIG. 5

## FIG. 6

FIG. 7

EP 4 450 865 B1

## FIG. 8

FIG. 9

EP 4 450 865 B1

# FIG. 10

# FIG. 11

# FIG. 12

# FIG. 13

# FIG. 14

# FIG. 15

# FIG. 16

# FIG. 17

FIG. 18

## FIG. 19

```
                                                          400

      474                         476

   ┌─────────┐              ┌─────────┐
   │ MEMORY  │              │ SENSOR  │
   └────┬────┘              └────┬────┘
        │                        │                    460
        ▲                        ▲
        │                        │
┌───────┴────────────────────────┴──────────────────────────┐
│                   SYSTEM CONTROL UNIT                       │
└──┬──────────┬──────────┬──────────┬──────────┬─────────────┘
   │  472     │  470     │  468     │  466     │  462
   ▲          ▲          ▲          ▲          ▲
   │          │          │          │          │
┌──┴─────┐ ┌──┴─────┐ ┌──┴─────┐ ┌──┴─────┐ ┌──┴──────┐
│INFORMA-│ │        │ │MEASURE-│ │        │ │TRANSPORT│
│TION     │ │DRYING  │ │MENT    │ │PRINTING│ │CONTROL  │
│ACQUISI-│ │CONTROL │ │CONTROL │ │CONTROL │ │UNIT     │
│TION UNIT│ │UNIT    │ │UNIT    │ │UNIT    │ │         │
└─────────┘ └──┬─────┘ └──┬─────┘ └──┬─────┘ └──┬──────┘
               │  412     │  410     │  406     │  464
               ▲          ▲          ▲          ▲
               │          │          │          │
            ┌──┴─────┐ ┌──┴─────┐ ┌──┴─────┐ ┌──┴──────┐
            │DRYING  │ │MEASURE-│ │PRINTING│ │TRANSPORT│
            │DEVICE  │ │MENT    │ │DEVICE  │ │DEVICE   │
            │        │ │DEVICE  │ │        │ │         │
            └────────┘ └────────┘ └────────┘ └─────────┘
```

EP 4 450 865 B1

## FIG. 20

COMPUTER-READABLE MEDIUM ~504

502
PROCESSOR

506
COMMUNICATION INTERFACE

510~

TRANSPORT CONTROL PROGRAM ~520

PRINTING CONTROL PROGRAM ~522

MEASUREMENT CONTROL PROGRAM ~524

DRYING CONTROL PROGRAM ~526

508
INPUT/OUTPUT INTERFACE

500

512~ INPUT DEVICE    DISPLAY DEVICE ~514

EP 4 450 865 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006017951 A

- JP 2012147143 A